# EUROPÄISCHE PATENTSCHRIFT

(11) **EP 1 501 983 B1**
(45) Veröffentlichungstag und Bekanntmachung des Hinweises auf die Patenterteilung: **20.12.2017**
(21) Anmeldenummer: 02740324.5
(22) Anmeldetag: 08.05.2002
(51) Int. Cl.: D21H 21/44, B32B 29/00

(54) **MEHRSCHICHTENKÖRPER MIT EINER LASERSENSITIVEN SCHICHT**
MULTILAYER BODY WITH A LASER-SENSITIVE LAYER
CORPS MULTICOUCHE POURVU D'UNE COUCHE SENSIBLE AU LASER

(43) Veröffentlichungstag der Anmeldung: 02.02.2005
(73) Patentinhaber: U-NICA Technology AG, 7208 Malans (CH)
(72) Erfinder: LUTZ, Norbert, 90607 Rückersdorf (DE); ZINNER, Gerhard, 90602 Pyrbaum (DE); SCHUMACHER, Matthias, 33178 Borchen (DE); KNAACK, Ulrich, 33098 Paderborn (DE); FISCHER, Dirk, 33106 Paderborn (DE)
(74) Vertreter: Köhler, Walter
(86) Internationale Anmeldenummer: PCT/DE2002/001677
(87) Internationale Veröffentlichungsnummer: WO 2003/095745

(56) Entgegenhaltungen:
- EP-A- 0 738 609
- WO-A-98/19868
- GB-A- 1 393 445
- US-A- 4 523 777
- US-A- 5 075 195
- US-A1- 2002 022 112

## Beschreibung

Die Erfindung betrifft einen Mehrschichtenkörper bestehend aus einem Substrat aus Papiermaterial und einem mehrlagigen Schichtenaufbau.

Der Einsatz von Laserstrahlung zur Erzeugung von laserinduzierten Markierungen zur Erhöhung der Fälschungssicherheit von aus Kunststoff bestehenden Karten, wie Ausweiskarten, Codekarten usw., ist bekannt. Mit den laserinduzierten Markierungen kann eine Individualisierung dieser Karten od. dgl. vorgenommen werden. Ein solches Verfahren zur laserinduzierten Markierung von Kunststoffkörpern ist z.B. in WO 98/19868 A1 und EP 0 738 609 A1 beschrieben.

Die Laserbehandlung zur Individualisierung wird bei Dokumenten, die aus Papiermaterial bestehen, nicht eingesetzt, weil Papiermaterial unter Einwirkung von Laserstrahlung verbrennt.

Der Erfindung liegt die Aufgabe zugrunde, durch Einsatz von Laserbestrahlung die Fälschungssicherheit von Papierdokumenten zu erhöhen. Dabei wird eine spezielle strukturelle Ausgestaltung des Papierdokumentes sowie ein besonderes Verfahren zur Erhöhung der Fälschungssicherheit angestrebt.

Diese Aufgabe löst die Erfindung mit einem Mehrschichtenkörper gemäss Anspruch 1 und mit einem Verfahren gemäss Anspruch 16.

Die Lösung sieht vor, dass das Papierdokument als Mehrschichtenkörper ausgebildet wird, in dem auf dem aus Papiermaterial bestehenden Substrat eine ein- oder mehrschichtige Folie oder dergleichen z.B. eine Heißprägefolie aufgebracht wird. Dieser somit hergestellte Schichtenaufbau soll mindestens eine lasersensitives Material enthaltende Schicht aufweisen. Das lasersensitive Material ist so ausgebildet, dass durch Lasereinwirkung auf die auf dem Substrat aufgebrachte Folie in der lasersensitiven Schicht eine laserinduzierte Markierung, beispielsweise in Form einer Farbmarkierung umgesetzt wird. Überraschenderweise wird bei der Laserbestrahlung unter Einwirkung der Strahlung auf die auf dem Substrat aufgebrachte Folie das aus Papiermaterial bestehende Substrat nicht beschädigt, d.h. die bei der unmittelbaren Bestrahlung von Papiermaterial unter Wirkung des Lasers erfolgende Verbrennung des Papiermaterials erfolgt nicht. Sicherheitshalber ist jedoch zwischen der lasersensitiven Schicht und der Oberfläche des Substrats noch eine spezielle Hintergrundschicht angeordnet, die die bei der Laserbehandlung eingesetzte Laserstrahlung zu einem hohen Grade reflektiert und den nicht reflektierten Anteil der Laserstrahlung vorzugsweise absorbiert oder zumindest jedenfalls nicht zu den darunterliegenden Schichten und also nicht zur Oberfläche des Substrats hin durchlässt. Diese schützende Hintergrundschicht kann aufgrund ihrer Lichtreflexion zusätzlich noch als Aufheller oder Farbverstärker der in der lasersensitiven Schicht erzeugten laserinduzierten Markierung wirken. Diese sowohl schützende als auch aufhellende und farbverstärkende Hintergrundschicht wird bei bevorzugten Ausführungen unter der lasersensitiven Schicht ausschliesslich in dem Bereich angeordnet, in dem die laserinduzierte Markierung erfolgt.

Die Hintergrundschicht kann auch als für Licht im sichtbaren Spektralbereich transparent ausgebildet sein, aber gleichzeitig als nicht transparent für Laserstrahlung in bestimmtem Wellenlängenbereich z.B. für den Wellenlängenbereich, der bei der Erzeugung der laserinduzierten Markierung eingesetzt wird. Wenn unter der Hintergrundschicht eine weitere lasersensitive Schicht angeordnet ist, ist es von Vorteil, wenn die Hintergrundschicht für die Laserstrahlung, die für die Erzeugung der laserinduzierten Markierung in dieser Schicht eingesetzt wird, transparent ist.

Es ist vorgesehen, dass das lasersensitive Material mindestens ein Farbmittel aufweist, das durch die Lasereinwirkung bleichbar ist. Es kann auch ein Farbmittel vorgesehen sein, das seine Farbe ändert. In jedem Fall ist das lasersensitive Material als Farbmittelgemisch ausgebildet, das aus mehreren verschiedenen Farbmittelkomponenten zusammengesetzt ist. Ein Mehrfarbenbild mit grosser

Variation der laserinduziert erzeugbaren Farben ist mit Ausführungen möglich, bei denen das lasersensitive Material als Gemisch von mindestens zwei lasersensitiven Komponenten ausgebildet ist, für die gilt, dass unter den für eine Komponente spezifischen Laserbedingungen die andere Komponente nicht oder nicht wesentlich veränderbar ist.

Besonders bevorzugt sind Ausführungen, bei denen laserinduziert ein Vollfarbenbild erzeugbar ist. Bei diesen Ausführungen ist vorgesehen, dass das lasersensitive Material ein Gemisch mit mindestens drei Komponenten ist, wobei jede dieser Komponenten jeweils ein Farbmittel, z.B. ein Pigment oder ein anderes Farbmittel ist. Bei den Pigmenten handelt es sich um meist unlösliche, vorzugsweise anorganische Farbmittel. Andere Farbmittel sind z.B. organische Farbmittel. Diese sind meist löslich. Es können Gemische eingesetzt werden, die als Farbmittel ausschliesslich Pigmente oder ausschliesslich andere Farbmittel oder Pigmente und andere Farbmittel aufweisen. Die Farbmittel, die also die Komponenten des Gemisches bilden, werden im Folgenden kurz Komponente genannt. Wesentlich ist, dass eine oder mehrere der Komponenten mittels Laser unter jeweils für die Komponente spezifischen Laserbedingungen bleichbar ist bzw. sind. D.h. zum Bleichen der ersten Komponente ist eine erste Laserbedingung vorgesehen, bspw. eine erste spezifische Laserwellenlänge; zum Bleichen der zweiten Komponente ist eine zweite Laserbedingung, z.B. eine zweite spezifische Laserwellenlänge vorgesehen und zum Bleichen der dritten Komponente eine dritte Laserbedingung, z.B. eine dritte spezifische Laserwellenlänge. Diese zum Bleichen der verschiedenen Komponenten verwendeten spezifischen Laserbedingungen bzw. Laserwellenlängen sind jeweils untereinander verschieden. Sie sind ferner so ausgewählt, dass jeweils unter den für eine Komponente spezifischen Laserbedingungen, z.B. die spezifische Laserwellenlänge, nur diese eine Komponente oder vorzugsweise nur diese eine Komponente bleichbar ist und die übrigen Komponenten dabei nicht oder im wesentlichen nicht bleichbar sind. Damit wird es möglich, in einem Schritt jeweils spezifisch nur eine Komponente bei der Laserbehandlung zu bleichen und die übrigen unverändert zu lassen.

Wenn man ein Dreikomponentengemisch einsetzt, wird also die Farbe der Markierung vor dem ersten Schritt durch die drei Komponenten gebildet. Nach der Laserbehandlung des ersten Schrittes wird die Farbe der Markierung an der behandelten Stelle durch die beiden bei der Laserbehandlung des ersten Schrittes nicht gebleichten Komponenten gebildet und gegebenenfalls zusätzlich durch die Restfarbe der im ersten Schritt je nach Behandlung mehr oder weniger stark gebleichten Komponente. Vorzugsweise erfolgt die Farbbildung durch subtraktive Mischung der in der laserinduzierten Schicht gemischt vorliegenden Komponenten. Die verschiedenen Komponenten können in einer Lage gemischt dicht nebeneinander oder mehrlagig gemischt übereinander vorliegen.

Das Verfahren zur Herstellung eines Mehrfarbenbildes sieht vor, dass in einem ersten Schritt durch Laserbestrahlung einer Stelle des Körpers, d.h. der lasersensitiven Schicht,bei für eine der z.B. (drei) Komponenten spezifischen Laserbedingungen nur die eine Komponente gebleicht wird und dass in einem zweiten Schritt durch Laserbestrahlung derselben Stelle des Körpers bei für eine weitere der (drei) Komponenten spezifischen Laserbedingungen nur diese weitere Komponente gebleicht wird. In dem ersten Schritt verbleiben somit neben der gebleichten ersten Komponente die (beiden) weiteren nicht gebleichten Komponenten, so dass die Farbe somit durch diese (beiden) nicht gebleichten Komponenten gebildet wird, gegebenenfalls bei nicht vollständigem Bleichungsgrad der ersten Komponente zusätzlich mit der Restfarbe der nur mehr oder weniger gebleichten ersten Komponente. Nach dem zweiten Schritt, in dem die zweite Komponente gebleicht wird, verbleibt - wenn man ein 3-Komponentengemisch ursprünglich eingesetzt hat - nur noch eine Komponente, so dass dann also die Farbe nur von dieser verbleibenden Komponente gebildet wird. Dies gilt für den Fall, dass in den vorangehenden Schritten die übrigen Komponenten vollständig gebleicht worden sind. Anderenfalls, d.h. bei nicht vollständigem Bleichungsgrad der ersten Komponente im ersten Schritt und bei nicht vollständigem Bleichungsgrad der zweiten Komponente im zweiten Schritt, wird die Farbe nach dem zweiten Schritt zusätzlich durch die Restfarbe der im ersten und zweiten Schritt nur mehr oder weniger gebleichten ersten und zweiten Komponenten gebildet.

Ferner ist als eventueller dritter Schritt die Laserbehandlung derselben Stelle des Körpers bei für die dritte Komponente, d.h. die bisher nicht gebleichte Komponente vorgesehen, wobei dieselbe Stelle des Körpers bei für diese dritte Komponente spezifischen Laserbedingungen, z.B. spezifischer Laserwellenlänge, nur diese dritte Komponente gebleicht wird. Nach diesem dritten Schritt sind somit an der betreffenden Stelle alle drei Komponenten gebleicht bzw. je nach Bleichungsgrad mehr oder weniger gebleicht. Diese Stelle erscheint somit abhängig von einer eventuellen farbigen Untergrundschicht oder noch eventuellen weiteren Komponenten im Körper bzw. in derselben Schicht des Körpers farblos oder getönt, im Grenzfall bei weissem Hintergrund weiss.

Ferner sind eventuelle weitere Schritte vorgesehen, in denen jeweils mit spezifischen Laserbedingungen jeweils eine oder mehrere weitere Komponenten gebleicht wird bzw. werden. Vorzugsweise ist vorgesehen, dass allgemein in einem n-ten Schritt durch Laserbestrahlung derselben Stelle des Körpers bei für eine andere weitere von n Komponenten nur diese n-te Komponente gebleicht wird.

Je nach Wahl der Komponenten und der spezifischen Laserbedingungen kann auch vorgesehen sein, dass bei der Laserbestrahlung wenigstens eine der Komponenten einen Farbumschlag aufweist.

Bei der Laserbehandlung in den einzelnen Schritten ist jeweils vorgesehen, dass bei der Laserbestrahlung durch Steuerung der Laserbedingungen, insbesondere der Laserwellenlänge, der Laserintensität und/oder der Bestrahlungszeit der zu erzielende Bleichungsgrad bzw. Farbumschlag eingestellt wird.

Die in den einzelnen Schritten jeweils eingesetzten Laserbedingungen werden vorzugsweise vor Durchführung des Verfahrens über Versuche mit den einzelnen Komponenten experimentell ermittelt und/ oder optimiert. Kriterium bei der Auswahl der Laserbedingungen ist vorzugsweise das zu erzielende Bleichungsergebnis. Die Auswahl der bei den einzelnen Schritten zum Einsatz kommenden Laserbedingungen kann so erfolgen, dass die Komponente bei der zum Bleichen eingesetzten Wellenlänge des Laserlichts Licht absorbiert, indem die Komponente bei dieser Wellenlänge ein Absorptionsmaximum, vorzugsweise eines von mehreren Absorptionsmaxima oder vorzugsweise ihr einziges oder ihr grösstes Absorptionsmaximum aufweist. Die Auswahl kann aber auch so erfolgen, dass die Komponente bei der zum Bleichen eingesetzten Wellenlänge des Laserlichts Licht absorbiert, wobei aber die Komponente bei dieser Wellenlänge kein Absorptionsmaximum aufweist, sondern diese Wellenlänge ausserhalb des Absorptionsmaximums oder ausserhalb der Absorptionsmaxima der Komponente liegt.

Um mit einem Pigmentgemisch mit relativ wenig Pigmentkomponenten arbeiten zu können und dabei aber möglichst viele, vorzugsweise alle Farben erzeugen zu können, ist es von Vorteil, wenn eine Komponente ein Cyanpigment ist und/oder eine Komponente ein Magentapigment ist und/oder eine Komponente ein Gelbpigment ist. Vorzugsweise sind in dem Pigmentgemisch ein Cyanpigment, ein Magentapigment und ein Gelbpigment enthalten. Bei besonderen Ausführungsbeispielen handelt es sich bei dem Pigmentgemisch um ein Gemisch mit ausschliesslich drei Pigmentkomponenten, vorzugsweise Cyanpigment, Magentapigment und Gelbpigment. Mit diesen drei Farben lassen sich durch subtraktive Mischung sämtliche Farben erzeugen. Durch das spezifische Bleichen der einzelnen Pigmentkomponenten in den einzelnen Schritten kann z.B. im ersten Schritt Blau erzeugt werden, wenn in diesem ersten Schritt nur oder vorzugsweise nur die Gelbpigmentkomponente gebleicht wird, oder es kann im ersten Schritt Grün erzeugt werden, wenn in diesem ersten Schritt nur oder vorzugsweise nur die Magentapigmentkomponente gebleicht wird, oder es kann im ersten Schritt Rot erzeugt werden, wenn in diesem ersten Schritt nur oder vorzugsweise nur die Cyanpigmentkomponente gebleicht wird. Im zweiten Schritt kann dann die Farbe Cyan, Magenta oder Gelb erzeugt werden, indem eine weitere der verbliebenen, im ersten Schritt nicht gebleichten Pigmentkomponenten gebleicht wird, d.h. wenn im ersten Schritt Blau erzeugt worden ist und also Cyan und Magenta im ersten Schritt nicht gebleicht worden sind, kann die Farbe Cyan im zweiten Schritt dadurch erzeugt werden, dass im zweiten Schritt die Magentakomponente gebleicht wird. Die Erzeugung der übrigen Farben erfolgt in entsprechender Weise, denn es gilt bei der subtraktiven Farbmischung:
a) cyan + magenta + gelb schwarz
b) cyan + magenta blau
c) cyan + gelb grün
d) gelb + magenta rot

Die Farbmischung a) liegt vor der Laserbehandlung, d.h. vor dem ersten Schritt vor. Die lasersensitive Schicht erscheint schwarz oder grau. Die Farbmischung b) oder c) oder d) liegt nach dem ersten Schritt vor, d.h. die lasersensitive Schicht hat an der Stelle, an der die Laserbehandlung im ersten Schritt erfolgt ist, eine blaue bzw. grüne bzw. rote Farbmarkierung. Nach dem zweiten Schritt, wenn also in dem zweiten Schritt an derselben Stelle die Laserbehandlung des zweiten Schritts durchgeführt worden ist, ist die Farbmarkierung an dieser Stelle der Schicht in der Farbe cyan oder gelb oder magenta, je nachdem, welche der beiden im ersten Schritt an dieser Stelle nicht gebleichten Pigmentkomponenten im zweiten Schritt nicht gebleicht worden sind. Um im 3. Schritt an dieser Stelle eine farblose oder transparente Markierung zu erhalten, ist an dieser selben Stelle sodann der 3. Schritt durchzuführen, in welchem also mit den jeweiligen pigmentspezifischen Laserbedingungen das verbliebene noch nicht gebleichte Pigment gebleicht wird.

Auf diese Weise kann an jeder Stelle durch sukzessive Laserbehandlung an dieser selben Stelle jeweils eine Farbmarkierung in einer beliebig gewünschten Farbe erzeugt werden. Es können auf diese Weise nacheinander nebeneinanderliegende Stellen des Körpers behandelt und so auf dem Kunststoffkörper durch nebeneinanderliegende Farbmarkierungen ein Mehrfarbenbild, vorzugsweise ein sogenanntes Vollfarbenbild erzeugt werden.

Anstelle des oben beschriebenen Pigmentgemischs mit den Pigmentkomponenten Cyanpigment, Magentapigment und Gelbpigment kann auch ein entsprechendes Farbmittelgemisch mit nicht Pigmente darstellenden Farbmitteln eingesetzt werden, d.h. ein Farbmittelgemisch aus Cyanfarbmittel, Magentafarbmittel und Gelbfarbmittel als Komponenten. Es kann hierbei in gleicher Weise gearbeitet werden, wobei in den einzelnen Schritten die für die jeweiligen Farbmittel spezifischen Laserbedingungen angewandt werden.

Zur Laserbehandlung werden bei den verschiedenen Systemen vorzugsweise gepulste frequenzvervielfachte Festkörperlaser, optische parametrische Oszillatoren (OPO's) und gepulste UV-Laser (beispielsweise Excimerlaser) eingesetzt. Bei der Laserbehandlung wird vorzugsweise die Intensität und/oder die Pulsdauer der Laserstrahlung so eingestellt, dass ein maximales Bleichergebnis bzw. eine maximale Farbveränderung ohne erkennbare Materialschädigung des Körpers auftritt. Das Verfahren kann an der auf dem Substrat aufgebrachten Folie und aber auch an separaten Folien alleine; so z.B. Transferfolien, insbesondere Heissprägefolien, oder an Laminierfolien eingesetzt werden. Mit dem Einsatz an Transfer- oder Laminierfolien ergeben sich Vorteile dadurch, dass diese Folien auch auf andere an sich sehr laserempfindliche Substrate aufgebracht werden können, um diese zu dekorieren oder zu kennzeichnen. Mit den Folien ergibt sich nur geringer Farbmittel- bzw. Pigmentbedarf, da die Farbmittel bzw Pigmente dann nur in einer dünnen Schicht vorliegen müssen. Mit der Verwendung von Folien ist es auch möglich beliebige grosse Körper, z.B. sehr grossfläche Papierkörper oder dergleichen nur lokal zu beschichten, z,B. durch Druckverfahren.

Bei der Laserbehandlung werden Energiedichten vorzugsweise zwischen 0,05 und 0,5 J pro cm² bei einer Pulsdauer von 5 bis 20 ns angewandt, wobei das Bleichergebnis auch von der Pulszahl bestimmt werden kann. Die lasersensitive Schicht mit der Pigmentmischung kann auf der Transfer- bzw. Laminierfolie vollflächig, aber auch nur bereichsweise vorhanden sein.

Im nachfolgenden werden bevorzugte Ausführungsbeispiele unter Bezugnahme auf die beigefügten Figuren näher erläutert.

Es zeigen:
- Figuren 1 bis 5: Schnittdarstellungen von verschiedenen Heissprägefolien jeweils mit lasersensitiver Schicht.
- Figuren 6 bis 10: Schnittdarstellungen verschiedener Laminierfolien jeweils mit lasersensitiver Schicht.
- Figuren 11a + 11: b eine Draufsicht und eine Schnittdarstellung eines Ausführungsbeispiels eines Mehrschichtenkörpers bestehend aus einer auf einem aus Papiermaterial ausgebildeten Substrat mit einer darauf aufgebrachten Transferfolie mit lasersensitiver Schicht;
- Figuren 12a + 12b: Draufsicht und Schnittdarstellung entsprechend den Figuren 11a und 11b eines abgewandelten Ausführungsbeispiels;
- Figuren 13 bis 15: Explosionsdarstellungen von laminierten Karten aus diversen Overlayfolien und aus Papiermaterial bestehenden Inlets.

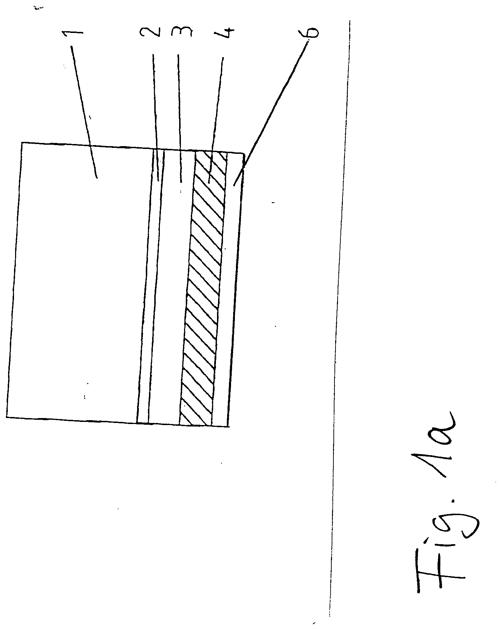

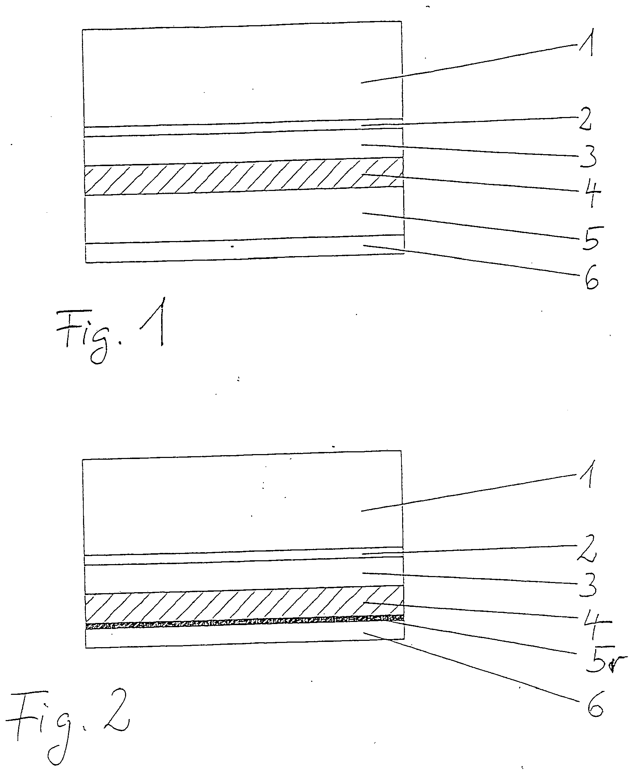

Bei den in den Figuren 1 bis 5 dargestellten Folien handelt es sich um Heissprägefolien. Die Heissprägefolie in Figur 1 umfasst einen Trägerfilm 1, eine Ablöseschicht 2, eine Schutzschicht 3, eine lasersensitive Schicht 4, eine Hintergrundschicht 5 und eine Klebeschicht 6.

Bei dem Trägerfilm 1 handelt es sich vorzugsweise um einen Polyesterfilm einer Dicke von 6 bis 100 µm, bevorzugt einer Dicke von 19 bis 38 µm. Auf diesem Trägerfilm 1 sind übereinander die Schichten 2 bis 6 angeordnet. Sie sind bei der Herstellung der Heissprägefolie nach an sich bekannten Verfahren aufgebracht.

Die Ablöseschicht 2 ist eine Trennschicht. Sie ist vorzugsweise als eine bei Wärmeentwicklung weich werdende Schicht ausgebildet, die beim Aufbringen der Heissprägefolie auf das Substrat die Ablösung der weiteren Schichten von dem Trägerfilm 1 gestattet. Die Ablöseschicht 2 hat im allgemeinen eine Dicke von höchstens 1 µm.

Die Schutzschicht 3 ist als Schutzlackschicht ausgebildet. Es handelt sich dabei um eine transparente Lackschicht mit der Aufgabe, die freie Oberfläche des mit der Heissprägefolie dekorierten Gegenstandes gegen mechanische Beschädigungen und chemische Einwirkungen weitgehend zu schützen. Die Schichtdicke liegt vorzugsweise zwischen 1 bis 2 µm.

Die lasersensitive Schicht 4 ist als sog. erste Farblackschicht ausgebildet. Es handelt sich hierbei um eine durch Pigmente oder andere Farbmittel eingefärbte Lackschicht einer Dicke von vorzugsweise 3 bis 10 µm. Die Pigmente bzw. die anderen farbgebenden Systeme bzw. Farbmittel dieser Farblackschicht sind mit Hilfe eines Laserstrahls, dessen Wellenlänge vorzugsweise im sichtbaren Bereich liegt, selektiv bleichbar und/oder durch Farbumschlag in der Farbe veränderbar. Vorzugsweise liegt die Pigmentkonzentration dieser Lackschicht 4 zwischen 3 und 15% bezogen auf Festkörper. Das Bindemittelsystem dieser Lackschicht 4 darf durch die Einwirkung der Laser optisch nicht verändert werden, so dass an den bestrahlten Stellen lediglich eine farbige Kontrastmarkierung ohne erkennbare Schädigung der Folie entsteht. Die Folie wird weder an der Oberfläche noch im Innern erkennbar geschädigt.

Die Hintergrundschicht 5 ist als sog. zweite Farblackschicht ausgebildet. Diese Schicht ist anders gefärbt als die lasersensitive Schicht 4. Die Schicht 5 ist z.B. weiss oder elfenbeinfarbig, wenn die lasersensitive Schicht 4 schwarz oder grau ist. Die Schicht 5 dient in erster Linie als helle Backupschicht für die in der lasersensitiven Schicht 4 durch Laserstrahlung erzeugten Farben. Die Schichtdicke der Schicht 5 liegt vorzugsweise bei 5 bis 20 µm oder bei 15 bis 20 µm.

Es besteht die Möglichkeit, die Hintergrundschicht 5 - ebenso wie die lasersensitive Schicht 4 - nicht über die gesamte Fläche der Heissprägefolie und damit nicht über die gesamte zu dekorierende Oberfläche in der gleichen Farbstellung vorzusehen. Die Schichten 4 und 5 können vielmehr einzeln - und damit auch unterschiedlich - aus verschiedenfarbigen Bereichen zusammengesetzt sein.

Bei der Kleberschicht 6 handelt es sich um eine bei Transferfolien an sich übliche und bekannte Kleberschicht einer Dicke von etwa 1 bis 10 µm, wobei die Kleberschicht für eine Heissprägefolie so zusammengesetzt ist, dass sie erst bei entsprechender Wärmeeinwirkung klebrig wird.

Die Schichten 2 bis 6 können nach folgenden Rezepturen hergestellt sein:

### Ablöseschicht 2 (Trennschicht):

| | |
|---|---|
| Toluol | 99,5 Teile |
| Esterwachs (Tropfpunkt 90°C) | 0,5 Teile |

### Schutzschicht 3 (Schutzlackschicht):

| | |
|---|---|
| Methylethylketon | 61,0 Teile |
| Diaketonalkohol | 9,0 Teile |

| | |
|---|---|
| Methylmethacrylat (Tg = 122°C) | 18,0 Teile |
| Polyethylendispersion (23% in Xylol) (Erweichungspunkt 140°C) | 7,5 Teile |
| Hochmolekulares Dispergieradditiv (40%, Aminzahl 20) | 0,5 Teile |
| Extender (Aluminiumsilikat) | 4,0 Teile |

### Lasersensitive Schicht 4 (Erste Farblackschicht):

| | | |
|---|---|---|
| Methylethylketon | | 34,0 Teile |
| Toluol | | 26,0 Teile |
| Ethylacetat | | 13,0 Teile |
| Cellulosenitrat (niedrigviskos, 65% in Alkohol) | | 20,0 Teile |
| Lineares Polyurethan (Fp.>200°C) | | 3,5 Teile |
| Hochmolekulares Dispergieradditiv (40%, Aminzahl 20) | | 2,0 Teile |
| z.B.: | Pigment Blue 15:4 | 0,5 Teile |
| | Pigment Red 57:1 | 0,5 Teile |
| | Pigment Yellow 155 | 0,5 Teile |

### Hintergrundschicht 5 (Zweite Farblackschicht):

| | |
|---|---|
| Methylethylketon | 40,0 Teile |
| Toluol | 22,0 Teile |
| Ethylen-Vinylacetat-Terpolymer (Fp.= 60°C) | 2,5 Teile |
| Polyvinylchlorid (Tg: 89°C) | 5,5 Teile |
| Polyvinylchlorid (Tg: 40°C) | 3,0 Teile |
| Dispergieradditiv (50%, Säurezahl 51) | 1,0 Teile |
| Titandioxid (d=3,8-4,2 g/cm³) | 26,0 Teile |

### Kleberschicht 6:

| | |
|---|---|
| Methylethylketon | 55,0 Teile |
| Toluol | 12,5 Teile |
| Ethanol | 3,5 Teile |
| Polyvinylacetat (Erweichungspkt. 80°C) | 6,0 Teile |
| Butyl-/Methylmethacrylat (Tg: 80°C) | 8,0 Teile |
| Ethylmethacrylatharz (Tg: 63°C) | 3,0 Teile |
| Methacrylatcopolymer (Tg: 80°C) | 5,0 Teile |
| Ungesättigtes Polyesterharz (Erweichungspkt. 103°C) | 3,5 Teile |
| Siliciumdioxid | 3,5 Teile |

Anstelle dieser Heissprägefolie kann auch eine andere Transferfolie eingesetzt werden. Sie kann entsprechenden Aufbau wie die beschriebene Heissprägefolie aufweisen.

Transferfolien - im konkreten Fall hier Heissprägefolien - werden vorzugsweise in herkömmlicher Weise auf ein aus Papiermaterial bestehendes Substrat, z.B. aus einer oder mehreren Inletfolien laminierter Körper aufgebracht, und zwar derart, dass die Kleberschicht 6 der Substratoberfläche zugewandt ist. Die Kleberschicht 6 bildet beim Heissprägen sodann eine Klebeverbindung mit der Substratoberfläche. Der Trägerfilm 1 wird sodann - nach dem unter Wärmeeinwirkung beim Heissprägen Erweichen der Ablöseschicht 2 - abgezogen. Bei der derart auf der Substratoberfläche aufgebrachten Heissprägefolie bildet sodann die Schutzschicht 3 die obere vom Substrat abgewandte Oberfläche der Prägefolie.

Die in Figur 1a dargestellte Transferfolie, die insbesondere als Heissprägefolie ausgebildet sein kann, weist im Unterschied zu der Folie in Figur 1 keine Hintergrundschicht 5 auf.

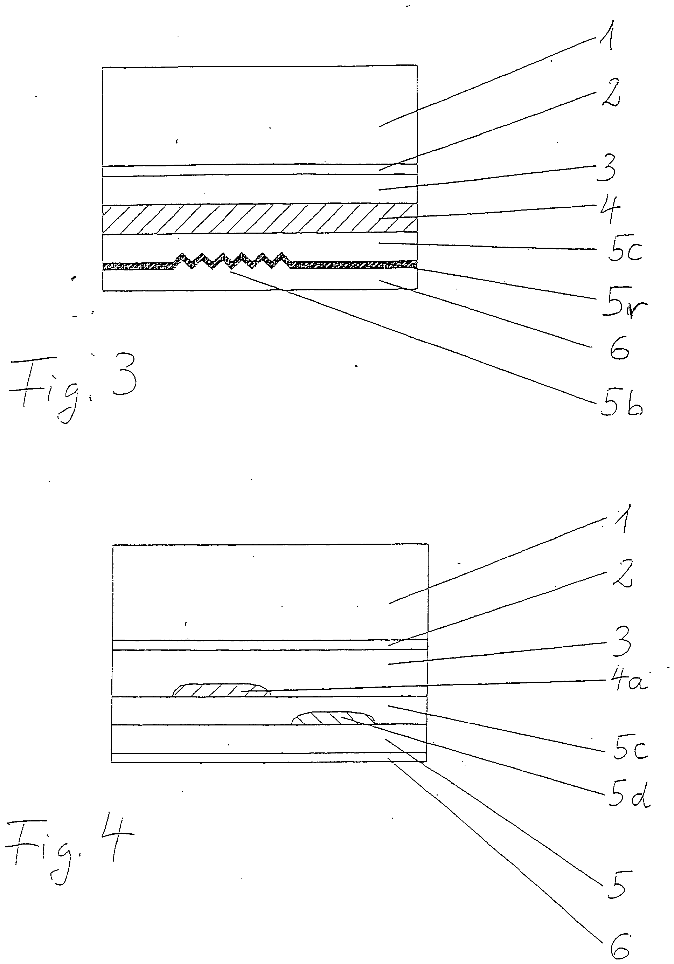

Die in den Figuren 2 bis 4 dargestellten Heissprägefolien weisen eine gegenüber der Folie in Figur 1 anders ausgebildete Hintergrundschicht auf. Bei dem Beispiel in Figur 2 ist die Hintergrundschicht als Reflexionsschicht 5r ausgebildet. In einem Sonderfall ist die Reflexionsschicht als metallische Reflexionsschicht ausgebildet. Die Reflexionsschicht kann für bestimmte Spektralbereiche transparent bzw. teiltransparent sein. Sie kann einen höheren Brechungsindex als die anderen Schichten aufweisen und weist deshalb erhöhte Lichtreflexion auf. Bei dem Beispiel in Figur 3 ist eine Schicht 5c vorgesehen als eine zusätzliche Lackschicht, die vorzugsweise transparent ist. Ferner ist eine Reflexionsschicht 5r vorgesehen, die bereichsweise eine Diffraktions- oder Hologrammstruktur 5b aufweist. Bei dem Ausführungsbeispiel in Figur 3 ist diese Struktur 5b als Bestandteil der Lackschicht 5c und der Kleberschicht 6 sowie der dazwischenliegenden Schicht ausgebildet. Alternativ oder zusätzlich kann eine Diffraktionsstruktur auch als Bestandteil der Lackschicht 5c und/oder der lasersensitiven Farblackschicht 4 und/oder der Kleberschicht 6 ausgebildet sein. Die Diffraktionsstruktur kann in diesen Fällen wie dargestellt bereichsweise, aber auch als durchgehende Schicht ausgebildet sein.

Bei dem Beispiel in Figur 4 ist in der Hintergrundschicht 5c in einem begrenzten Bereich ein Druckbild 5d und in der lasersensitiven Schicht seitlich versetzt zu diesem ein begrenzter lasersensitiver Bereich 4a angeordnet.

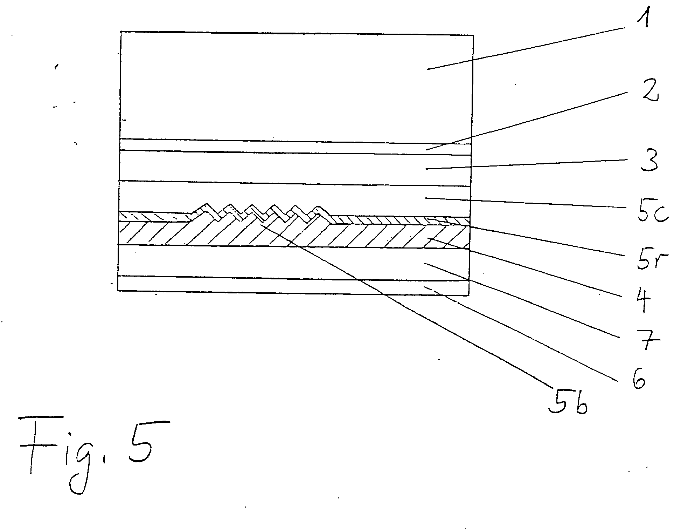

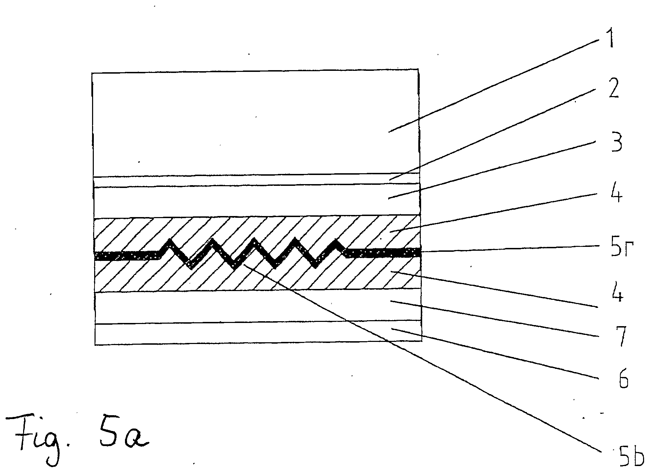

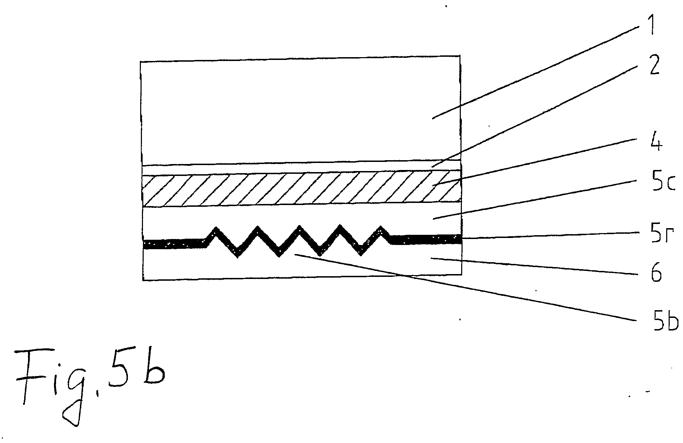

In Figur 5 ist eine Heissprägefolie mit einem abgewandelten Schichtenaufbau gezeigt. Der Schichtenaufbau ist ähnlich dem in Figur 3, wobei jedoch die Reihenfolge der Schichten abgewandelt ist und zwar derart, dass die lasersensitive Schicht 4 auf der zum Substrat gewandten Seite der Reflexionsschicht 5 angeordnet ist. Die Schichten liegen in folgender Reihenfolge aufeinander:
Ein Trägerfilm 1, eine Ablöseschicht 2, eine Schutzschicht 3, eine Zwischenschicht 5c, eine Reflexionsschicht 5, eine lasersensitive Schicht 4, eine Hintergrundschicht 7 und eine Kleberschicht 6. In den aneinander angrenzenden Bereichen von lasersensitiver Schicht 4, Reflexionsschicht 5 und Zwischenschicht 5c ist eine Diffraktionsstruktur 5b ausgebildet. Sie kann als Beugungsgitter ausgebildet sein. Alternativ kann die Struktur 5b auch als Hologrammstruktur ausgebildet sein. Bei dem dargestellten Ausführungsbeispiel in Figur 5 wird die Diffraktionsstruktur 5b bei der Herstellung der Folie ausgebildet, indem die Diffraktionsstruktur zunächst in die Zwischenschicht 5c eingeprägt wird, sodann die Reflexionsschicht 5r, z. B. durch Aufdampfen aufgebracht wird. Die Reflexionsschicht 5 ist in den Abschnitten ausserhalb der Diffraktionsstruktur als glatte Reflexionsschicht 5r ausgebildet. Sie hat vorzugsweise eine Schichtdicke von < 1 µm. Sie ist in bestimmten Betrachtungswinkeln zumindest für bestimmte Spektralbereiche transparent oder teiltransparent. Nach dem Aufbringen der Reflexionsschicht 5r wird die lasersensitive Schicht 4 aufgebracht. Die so hergestellte Diffraktionsstruktur 5b ist in den aneinander unmittelbar angrenzenden Bereichen der Schichten 5c und 4 ausgebildet. Bei der Betrachtung der Diffraktionsstruktur ergeben sich in Abhängigkeit vom Beleuchtungs- und Betrachtungswinkel variierende optische Effekte.

Bei der Folie in Figur 5a liegen die Schichten in folgender Reihenfolge: Trägerschicht 1, Ablöseschicht 2, Schutzschicht 3, lasersensitive Schicht 4, Reflexionsschicht 5r, lasersensitive Schicht 4, zusätzliche Lackschicht 7 und Kleberschicht 6. Die beiderseits der Reflexionsschicht 5r ausgebildeten lasersensitiven Schichten 4 können identisch ausgebildet sein, d.h. die Reflexionsschicht ist dann in dieser lasersensitiven Gesamtschicht angeordnet. Die lasersensitiven Schichten können jedoch auch unterschiedlich ausgebildet sein. In einander angrenzenden Bereichen der lasersensitiven Schichten 4 und der Reflexionsschicht 5r ist eine Diffraktionsstruktur 5b ausgebildet. Alternativ kann die Struktur 5b auch als Hologrammstruktur ausgebildet sein. Erhöhte Fälschungssicherheit ergibt sich bei diesem Ausführungsbeispiel dadurch, dass zwei lasersensitive Schichten an die Diffraktions- bzw. Hologrammstruktur angrenzen, die gleich oder verschieden ausgebildet sein können. Die Lackschicht 7, die optional ist, ist hierbei als transparente Schicht bzw. als helle Backupschicht ausgebildet. Alternativ können auch die Lackschicht 7 und die Kleberschicht 6 entfallen und die in Figur 5a unter der Reflexionsschicht 5r dargestellte zweite lasersensitive Schicht 4 als lasersensitive Kleberschicht ausgebildet sein.

Bei der Folie in Figur 5b liegen die Schichten in folgender Reihenfolge: Trägerfilm 1, Ablöseschicht 2, lasersensitive Schicht 4, zusätzliche Lackschicht 5c, Reflexionsschicht 5r, Kleberschicht 6. Die Schichten 5c und 6 können aus identischem Material oder verschiedenem Material ausgebildet sein. Bei der lasersensitiven Schicht 4 handelt es sich bei diesem Ausführungsbeispiel um eine Schutzlackschicht, die lasersensitiv ausgebildet ist, indem sie die betreffenden vergleichbaren Pigmente enthält. In den aneinander angrenzenden Bereichen von zusätzlicher Lackschicht 5c, Reflexionsschicht 5r und Kleberschicht 6 ist eine Diffraktionsstruktur ausgebildet. Sie kann als Beugungsgitter ausgebildet sein. Alternativ kann die Struktur 5b auch als Hologrammstruktur ausgebildet sein.

Nachdem die Transferfolie, im vorliegenden Falle Prägefolie, auf dem Substrat aufgebracht ist, erfolgt die Laserbehandlung, um transparente und/oder farbige Markierungen in der lasersensitiven Schicht 4 zu erzeugen. Um an einer bestimmten Position in der lasersensitiven Schicht 4 eine bestimmte Markierung, vorzugsweise Farbmarkierung zu erzeugen, wird diese Stelle mit Laserstrahlung bestrahlt.

Im Falle der Laserbehandlung einer Folie mit dem Schichtenaufbau gemäss Figur 5 erfolgt die Laserbestrahlung durch die Reflexionsschicht inklusive der diffraktiven Struktur 5b hindurch. Der Laserstrahl wird bevorzugt senkrecht auf die Folienebene von oben her gerichtet. Die Reflexionsschicht 5r ist für die Laserstrahlung durchlässig, insbesondere bei Senkrechteinstrahlung. Auch die Gitter- oder Hologrammstruktur 5b der im übrigen Bereich die Reflexionsschicht 5r bildenden Schicht ist für die Laserstrahlung durchlässig, wobei die Strahlung jedoch an der Diffraktionsstruktur mehr oder weniger auch und zum Teil reflektiert werden kann. Die unter der im übrigen Bereich die Reflexionsschicht 5r bildenden Schicht noch innerhalb der Diffraktionsstruktur 5b und darunter angeordnete lasersensitive Schicht 4 wird durch die Lasereinwirkung verändert, indem an der bestimmten Stelle eine Farbveränderung durch Bleichen erfolgt.

Im Folgenden wird der Bleichvorgang, wie er bei den dargestellten Ausführungsbeispielen in der jeweiligen lasersensitiven Schicht abläuft, beschrieben.

Bei dem lasersensitiven Material der lasersensitiven Schicht handelt es sich um ein Gemisch aus drei Komponenten, nämlich Cyanpigment-Komponente, Magentapigment-Komponente und Gelbpigment-Komponente.

Beim Bleichen wird in einem ersten Schritt eine blaue oder grüne oder rote Farbmarkierung erzeugt, indem diese Stelle mit einer bestimmten Laserwellenlänge bestrahlt wird, mit der eine bestimmte Pigmentkomponente gebleicht wird.

Um die Farbe Blau zu erzeugen darf nur die Gelbpigmentkomponente gebleicht werden. Hierfür wird blaues Laserlicht eingesetzt. Für das Bleichen ist eine bestimmte Mindestintensität erforderlich. Ferner darf eine gewisse Pulsdauer nicht überschritten werden. Um im ersten Schritt eine grüne Farbmarkierung zu erhalten darf nur die Magentapigmentkomponente gebleicht werden. Hierfür wird grünes Laserlicht eingesetzt. Um im ersten Schritt eine rote Farbmarkierung zu erhalten, darf nur die Cyanpigmentkomponente gebleicht werden. Hierfür wird rotes Laserlicht eingesetzt.

Um an dieser Stelle eine Farbmarkierung in der Farbe Cyan oder Magenta oder Gelb zu erzeugen, wird diese Stelle in einem zweiten Schritt laserbehandelt, und zwar mit einer Laserwellenlänge, mit der eine der an dieser Stelle noch nicht gebleichten Pigmentkomponenten gebleicht wird. Wenn im ersten Schritt eine blaue Farbmarkierung erzeugt worden ist, sind an dieser Stelle die Cyanpigmentkomponente und die Magentapigmentkomponente ungebleicht. Um die Farbe Cyan an dieser Stelle zu erzeugen, muss die MagentaPigmentkomponente in diesem zweiten Schritt gebleicht werden. Dies erfolgt mit grünem Laserlicht. Es ergibt sich damit an dieser Stelle eine cyanfarbene Markierung.

Falls in dem zweiten Schritt anstelle dieser cyanfarbenen Markierung eine magentafarbene Markierung erhalten werden soll, muss die im ersten Schritt erzeugte blaue Farbmarkierung mit rotem Laserlicht behandelt werden. Dadurch wird das Cyanpigment an dieser Stelle gebleicht, so dass also das Magenta-Pigment ungebleicht an dieser Stelle verbleibt. Es ergibt sich damit die magentafarbene Markierung an dieser Stelle.

In entsprechender Weise lassen sich aus einer im ersten Schritt erzeugten grünen Farbmarkierung, die aus dort verbliebenem ungebleichten Cyanpigment und Gelbpigment gebildet wird, eine cyanfarbene Markierung oder eine gelbfarbene Markierung erzeugen, und zwar durch Behandlung mit blauem Laserlicht bzw. rotem Laserlicht.

In entsprechender Weise kann eine im ersten Schritt erzeugte rote Farbmarkierung im zweiten Schritt in eine gelbe oder magentafarbene Markierung umgewandelt werden, und zwar durch Laserbehandlung im zweiten Schritt mit grünem Laserlicht bzw. blauem Laserlicht.

Um an der im ersten und zweiten Schritt behandelten Stelle eine transparente Stelle zu erhalten, d.h. eine weisse Stelle zu erhalten, wenn die Hintergrundschicht 5 weiss ist, muss in einem 3. Schritt diese Stelle mit einem Laserstrahl behandelt werden, dessen Wellenlänge so eingestellt ist, dass die an dieser Stelle nach dem zweiten Schritt ungebleicht verbliebene Pigmentkomponente gebleicht wird, d.h. die gelbe Farbmarkierung muss mit blauem Laserlicht, die magentafarbene Markierung mit grünem Licht und die cyanfarbene Markierung mit rotem Laserlicht gebleicht werden.

In gleicher Weise werden sodann in der lasersensitiven Schicht 4 weitere benachbarte Stellen behandelt, um weitere Farbmarkierungen in der Schicht 4 der Prägefolie zu erzeugen. Auf diese Weise kann ein Vollfarbenbild hergestellt werden.

Laserbehandlung kann auch eingesetzt werden, um in dem Farbmittel bzw. den Farbmitteln in der lasersensitiven Schicht durch Farbumschlag Farbmarkierungen bzw. ein Vollfarbenbild zu erzeugen. Die Laserbehandlung kann in entsprechender Weise mit aufeinanderfolgenden Verfahrensschritten erfolgen. Als Farbmittel, d.h. farbgebende Substanzen kommen Pigmente in Frage. Diese sind meist unlöslich und es handelt sich in der Regel um anorganische Substanzen. Als Farbmittel kommen aber auch meist lösliche, organische Farbmittel in Frage. Der Farbumschlag erfolgt jeweils bei spezifischen Laserbedingungen, die bei der Laserbehandlung in den einzelnen Schritten dann angewandt werden.

Die Laserbehandlung der Transferfolie zur Erzeugung der Farbmarkierungen kann alternativ auch vor dem Aufbringen der Folie erfolgen, und zwar insbesondere dann, wenn die Schutzschicht 3 als eine für Laserstrahlung nicht oder nur teilweise transparente Schicht oder eine für Laserstrahlung im bestimmten Wellenlängenbereich nicht transparente Schicht ausgebildet ist oder eine zusätzliche UV-absorbierende Schutzschicht vorgesehen ist. Die Laserbehandlung erfolgt dann vor dem Auftragen der Folie, indem der Laserstrahl auf die Rückseite der Folie, d.h. auf die Hintergrundschicht 5 bzw. die Kleberschicht 6 gerichtet wird und somit die lasersensitive Schicht 4 also von der anderen Seite her behandelt wird, um darin die Farbmarkierungen in gleicher Weise zu erzeugen. Die Hintergrundschicht 5 und die Kleberschicht 6 sind bei diesen Anwendungen für die betreffende Laserstrahlung transparent oder zumindest teiltransparent.

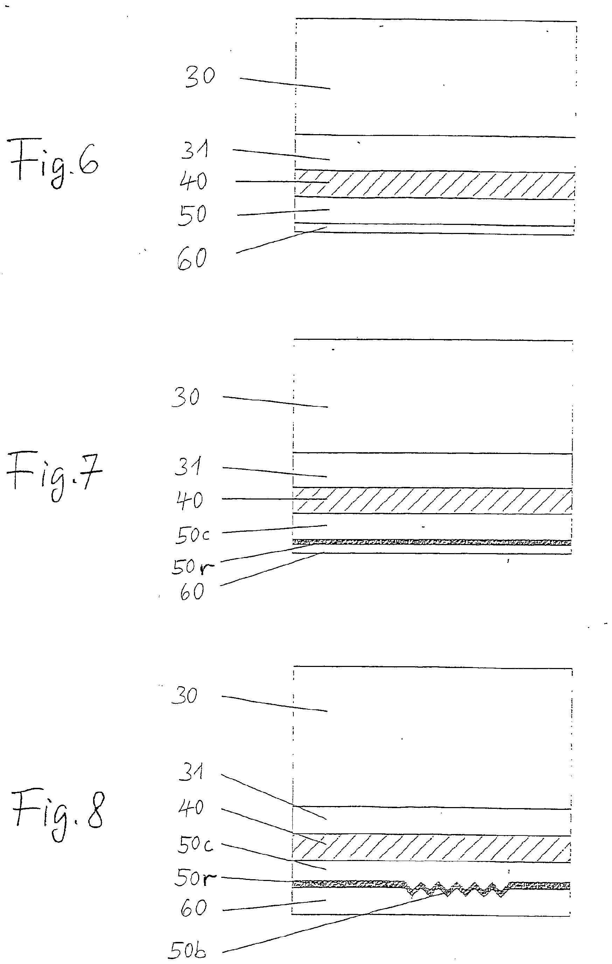

In entsprechender Weise können Farbmarkierungen auch in Laminierfolien erzeugt werden. Solche Laminierfolien sind in den Figuren 6 bis 10 dargestellt. Die Laminierfolie in Figur 6 umfasst eine sog. Overlay-Folie 30, eine optionale Zwischenschicht 31, eine lasersensitive Schicht 40, eine eine Hintergrundschicht bildende Zwischenschicht 50, die ebenfalls optional ist, und eine Kleberschicht 60, die ebenfalls optional ist. Beim Laminiervorgang wird die Laminierfolie mit der Kleberschicht 60 der Substratoberfläche zugewandt auf das Substrat aufgebracht. Über die Kleberschicht 60 wird eine Klebeverbindung mit der Substratoberfläche ausgebildet. Die Overlay-Folie 30 bildet sodann die obere Schutzschicht, deren vom Substrat abgewandte Oberfläche die äussere Oberfläche der Folie bildet. Die Overlay-Folie 30 verbleibt also nach dem Aufbringen der Laminierfolie dort aufgebracht. Sie entspricht der Schutzschicht 3 der Prägefolie in Figur 1. Die lasersensitive Schicht 40 entspricht der lasersensitiven Schicht 4, d.h. der ersten Lackschicht 4 der Prägefolie in Figur 1. Die Zwischenschicht 50 entspricht der Hintergrundschicht 5, d.h. der zweiten Lackschicht 5 der Prägefolie in Figur 1. Die Kleberschicht 60 entspricht der Kleberschicht 6 der Prägefolie in Figur 1.

Die Laminierfolie in Figur 6a stellt eine Abwandlung der Laminierfolie in Figur 6 dar, bei der entsprechend wie bei der Heissprägefolie in Figur 1c die der Hintergrundschicht 5 entsprechende Hintergrundschicht 50 fehlt.

Die Laminierfolien in den Figuren 7 und 8 stellen Abwandlungen der Laminierfolie in Figur 6 dar, bei denen die Hintergrundschicht in entsprechender Weise wie die Hintergrundschicht bei den Heissprägefolien in den Figuren 2 und 3 abgewandelt ist.

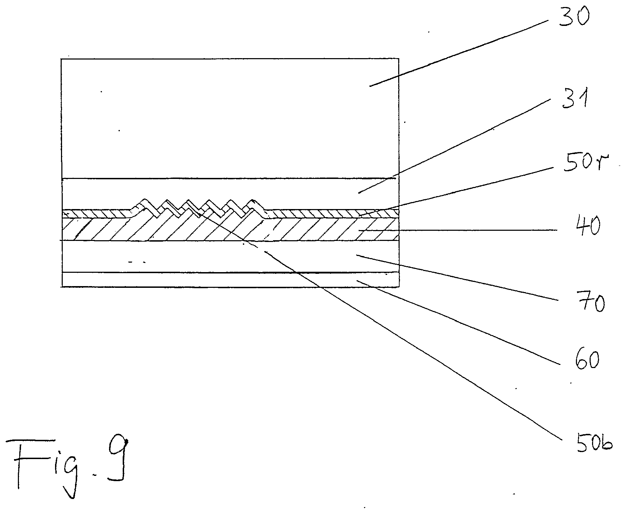

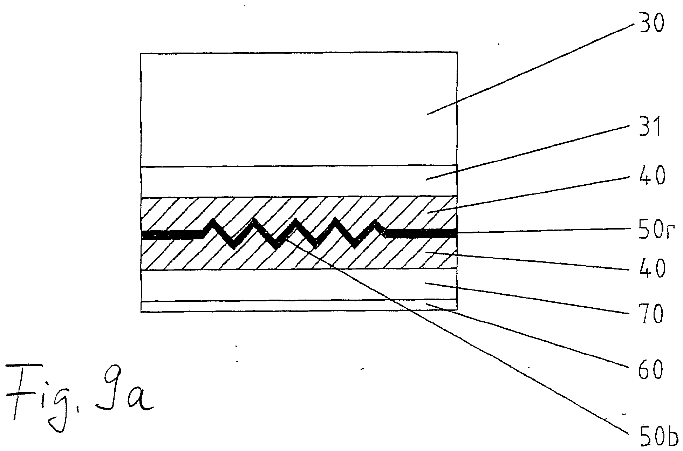

Die Laminierfolie in Figur 9 weist einen Schichtenaufbau mit gegenüber Figur 6 bis 8 abgewandelter Reihenfolge der aufeinander liegenden Schichten auf. Die Reihenfolge der Schichten entspricht dem Aufbau der Heissprägefolie in Figur 5. Hierbei ist die Schicht 70 eine optionale Hintergrundschicht.

Figur 9a zeigt ein gegenüber dem Ausführungsbeispiel in Figur 9 abgewandeltes Ausführungsbeispiel mit einer Reihenfolge der Schichten entsprechend dem Aufbau der Heissprägefolie in Figur 5a.

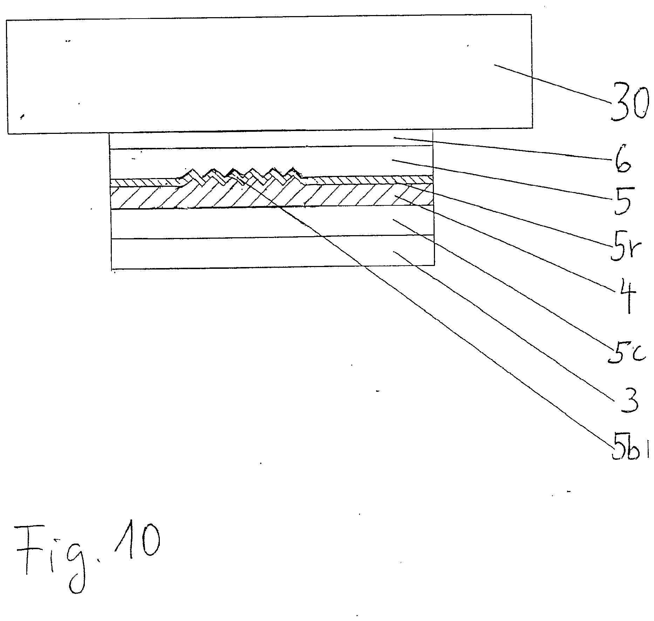

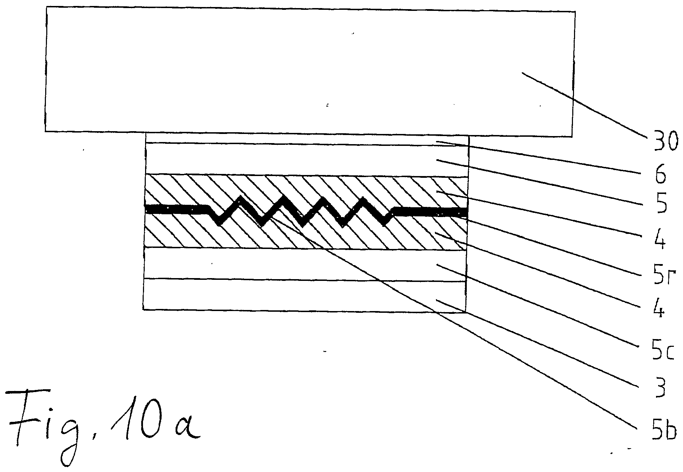

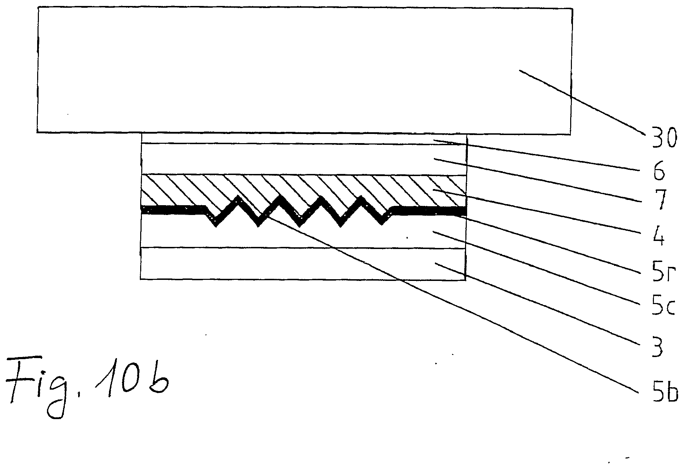

Die Laminierfolie in Figur 10 stellt eine Abwandlung der Laminierfolie in Figur 9 dar. Bei diesem Ausführungsbeispiel ist die Overlay-Folie 30 mit einer darauf aufgebrachten Heissprägefolie versehen. Diese dort aufgebrachte Heissprägefolie ersetzt die bei der Laminierfolie in Figur 9 vorgesehenen Schichten 31, 50 bzw. 50r, 40, 70 und 60 durch die entsprechenden Schichten der Heissprägefolie. Bei der zur Herstellung dieser Laminierfolie verwendeten Heissprägefolie ist im Unterschied zu der Prägefolie in Figur 5 die Reflexionsschicht 5r und die lasersensitive Schicht 4 in umgekehrter Reihenfolge angeordnet, so dass bei der Laminierfolie in Figur 10 nun entsprechend wie bei der Laminierfolie der Figur 9 die Reflexionsschicht 5r auf der vom Substrat abgewandten Seite der lasersensitiven Schicht 4 angeordnet ist. Übereinstimmend wie bei den übrigen dargestellten Ausführungsbeispielen ist die Diffraktionsstruktur 5b bei der Laminierfolie in Figur 10 ebenfalls in den aneinander angrenzenden Bereichen der Schichten 4 und 5 ausgebildet. Die Lackschicht 5 ist hierbei als transparente Schicht ausgebildet.

Die Laminierfolie in Figur 10a ist ähnlich aufgebaut wie die Laminierfolie in Figur 10. Bei dem Ausführungsbeispiel in Figur 10a ist jedoch die Overlayfolie 30 mit einer darauf aufgebrachten Heissprägefolie versehen, die ähnlich aufgebaut ist, wie die Heissprägefolie des Ausführungsbeispiels in Figur 5a. Diese auf die Overlayfolie 30 aufgebrachte Heissprägefolie ersetzt die bei der Laminierfolie in Figur 9a vorgesehenen Schichten 31, 40, 50, 50r, 40, 70 und 60 durch die entsprechenden Schichten der Heissprägefolie. Die Laminierfolie in Figur 10a weist eine Schichtenfolge mit folgender Reihenfolge auf: Overlayfolie 30, Kleberschicht 6, optionale Lackschicht 5, lasersensitive Schicht 4, Reflexionsschicht 5r, lasersensitive Schicht 4, zusätzliche Lackschicht 5c und Schutzschicht 3. Die beiderseits der Reflexionsschicht 5r ausgebildeten lasersensitiven Schichten 4 können identisch ausgebildet sein, d.h. die Reflexionsschicht 5r ist dann in dieser lasersensitiven Gesamtschicht angeordnet. Die lasersensitiven Schichten 4 können jedoch auch unterschiedlich ausgebildet sein. Die Lackschicht 5 ist hierbei als transparente Schicht bzw. als helle Backupschicht ausgebildet.

Die Laminierfolie in Figur 10b stellt ein Ausführungsbeispiel dar, bei dem ebenfalls auf der Overlayfolie 30 eine Heissprägefolie aufgebracht ist. Diese aufgebrachte Heissprägefolie ist ähnlich ausgebildet wie die Folie in Figur 5. Sie ersetzt die bei der Laminierfolie in Figur 9a vorgesehenen Schichten 31, 40, 50 bzw. 50r, 40, 70 und 60 durch die Schichten der Heissprägefolie. Die Laminierfolie in Figur 10b weist eine Schichtenfolge mit folgender Reihenfolge auf: Overlayfolie 30, Kleberschicht 6, optionale Lackchicht 7, lasersensitive Schicht 4, Reflexionsschicht 5r, zusätzliche Lackschicht 5c und Schutzschicht 3. Die Lackschicht 7 ist hierbei als transparente Schicht bzw. als helle Backupschicht ausgebildet.

Die Laserbehandlung der Laminierfolie erfolgt in entsprechender Weise wie für die Transferfolie beschrieben, d.h. durch entsprechendes sukzessives Bleichen der in der lasersensitiven Schicht 40 enthaltenen Pigmente oder anderen Farbmittel oder durch entsprechende Farbumschläge der Pigmente oder anderen Farbmittel.

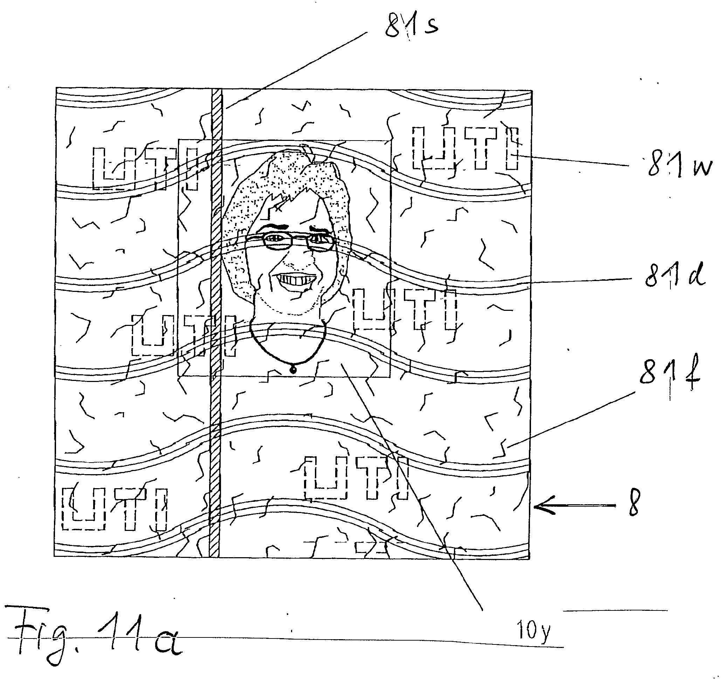

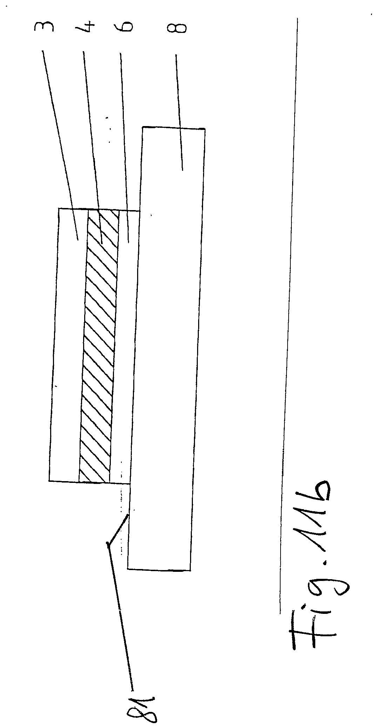

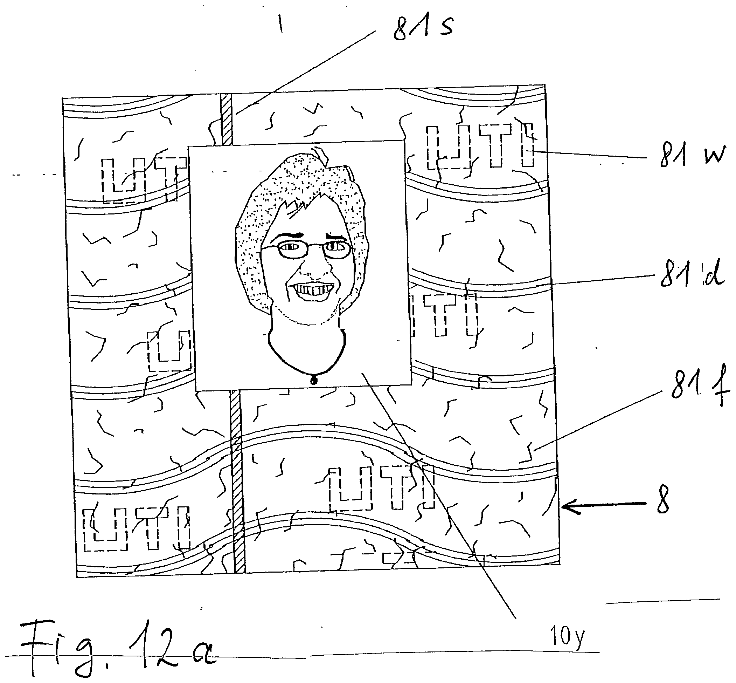

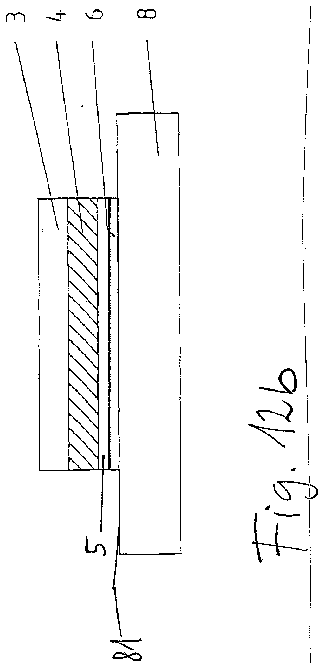

Die Transferfolien und Laminierfolien mit einem Folienaufbau, wie vorangehend in Verbindung mit den Figuren 1 bis 10 beschrieben sind, werden auf ein aus Papiermaterial bestehendes Substrat mit dem beschriebenen Aufbringvorgang aufgebracht. Bei dem Substrat kann es sich vorzugsweise um einen Kartenkörper handeln, der aus mehreren Inlets laminiert ist, wobei die Inlets zumindest zum Teil aus Papiermaterial bestehen. Mit dem Aufbringen der Folien entstehen dabei jeweils Mehrschichtenkörper, die jeweils mindestens eine lasersensitive Schicht 4 bzw. 40 aufweisen. Durch die zuvor beschriebene Laserbehandlung können in der lasersensitiven Schicht Farbmarkierungen erzeugt werden. Im nachfolgenden werden Ausführungsbeispiele von derartigen Mehrschichtenkörpern mit laserinduzierten Farbmarkierungen anhand der Figuren 11a, 11b und 12a, 12b beschrieben.

Bei dem Ausführungsbeispiel in den Figuren 11a und 11b ist eine Transferfolie gemäss Figur 1a auf ein aus Papiermaterial bestehendes Substrat 8 aufgebracht. Wie in der Schnittdarstellung in Figur 11b zu erkennen ist, besteht der Mehrschichtenkörper aus der Schutzschicht 3, der lasersensitiven Schicht 4, der Klebeschicht 6 und dem Substrat 8, wobei auf der Oberfläche des Substrats 8 eine spezielle Kennzeichnung 81 vorhanden ist. Bei dieser Kennzeichnung 81 kann es sich um eine auf dem Substrat 8 aufgebrachte separate Schicht handeln. Wie in der Draufsicht in Figur 11a zu erkennen ist, besteht die Kennzeichnung 81 aus diversen Kennzeichnungselementen und zwar einem Sicherheitsdruck 81d , der als aufgedruckte Guillochen ausgebildet sein kann, und fluorszierenden Fäden 81f, die vorzugsweise lediglich unter UV-Licht fluoreszieren und bei Tageslicht als schwarze Fäden erkennbar sind. Ferner ist in dem Substrat 8 noch ein Wasserzeichen 81w ausgebildet sowie ein Sicherheitsstreifen 81s. Bei dem Sicherheitsstreifen 81s kann es sich um einen streifen- oder fadenförmigen Körper handeln, der eine Diffraktions- und/oder Hologrammstruktur aufweisen kann und zusätzliche Sicherheitsmerkmale, wie auch z.B. laserinduzierte Markierungen usw.. In der lasersensitiven Schicht ist, wie in Figur 11a zu erkennen ist, ein laserinduziertes Bild 10y ausgebildet. Dieses laserinduzierte Bild 10y kann als Vollfarbenbild über das zuvor beschriebene Bleichverfahren erzeugt sein. Das laserinduzierte Bild 10y ist lediglich in einem rechteckigen Grundriss aufweisenden Teilbereich der Oberfläche des Kartenkörpers 8 ausgebildet. Vorzugsweise kann die gesamte Transferfolie mit der lasersensitiven Schicht 4 ausschliesslich in diesem Bereich des Kartenkörpers 8 aufgebracht sein. Der rechteckige Bildbereich des laserinduzierten Bildes 10y ist, wie in Figur 11a zu erkennen ist, transparent, d.h. der gesamte Bereich der lasersensitiven Schicht ist über die Laserbehandlung so gebleicht, dass die farbigen Bildbestandteile farblich getönt transparent und der Bereich um die Farbmarkierungen vollständig transparent gebleicht ist. Damit ergibt sich der Vorteil, dass die auf und in dem Kartenkörper 8 vorhandene Kennzeichnung 81 durch das laserinduzierte Bild 10y hindurch sichtbar scheint. Auf diese Weise wird besonders hohe Fälschungssicherheit erhalten.

Bei dem abgewandelten Ausführungsbeispiel in den Figuren 12a und 12b ist im Unterschied zu dem Ausführungsbeispiel in den Figuren 11a und 11b eine Transferfolie mit einem Schichtenaufbau gemäss Figur 1 eingesetzt. Sie weist also zusätzlich zu den Schichten 3, 4, 6 eine zwischen der lasersensitiven Schicht 4 und der Klebeschicht 6 ausgebildete Hintergrundschicht 5 auf. Bei dieser Hintergrundschicht 5 handelt es sich um eine die bei der Erzeugung des laserinduzierten Bildes 10y eingesetzte Laserstrahlung reflektierende und den nicht reflektierten Anteil der Laserstrahlung nicht durchlassende und absorbierende Schicht. Diese spezielle Hintergrundschicht bewirkt, dass die unter dem laserinduzierten Bild 10y vorhandene Kennzeichnung 81 optisch abgedeckt ist, d.h. z.B. bei Licht im sichtbaren Spektralbereich nicht mehr von aussen erkennbar ist. Die Hintergrundschicht 5 kann auch aufgrund der Reflexion des Lichtes und eventuell zusätzlich in der Hintergrundschicht 5 vorhandener Aufhellersubstanzen eine Farbverstärkung und/oder Aufhellung des laserinduzierten Farbbildes 10y bewirken. Ferner bewirkt die Hintergrundschicht 5, dass bei der Lasereinwirkung zur Erzeugung des laserinduzierten Bildes 10y die darunterliegenden Schichten, d.h. insbesondere auch das Substrat 8, nicht durch Lasereinstrahlung beschädigt wird oder irgendwelche anderen ungewünschten Veränderungen in den Schichten bzw. im Substrat durch Lasereinstrahlung erfolgen.

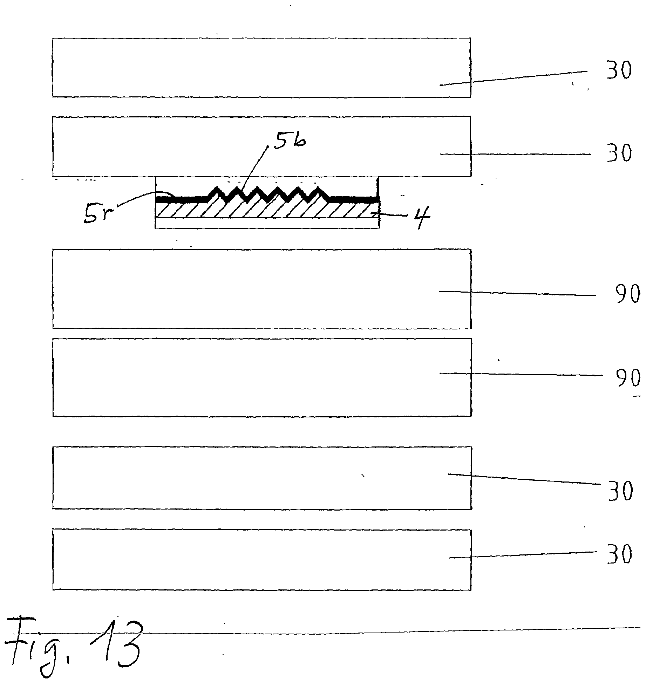

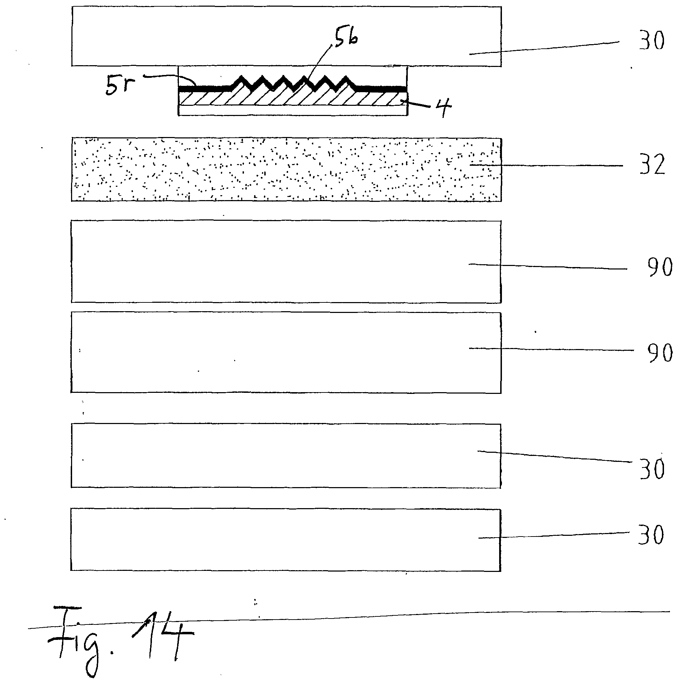

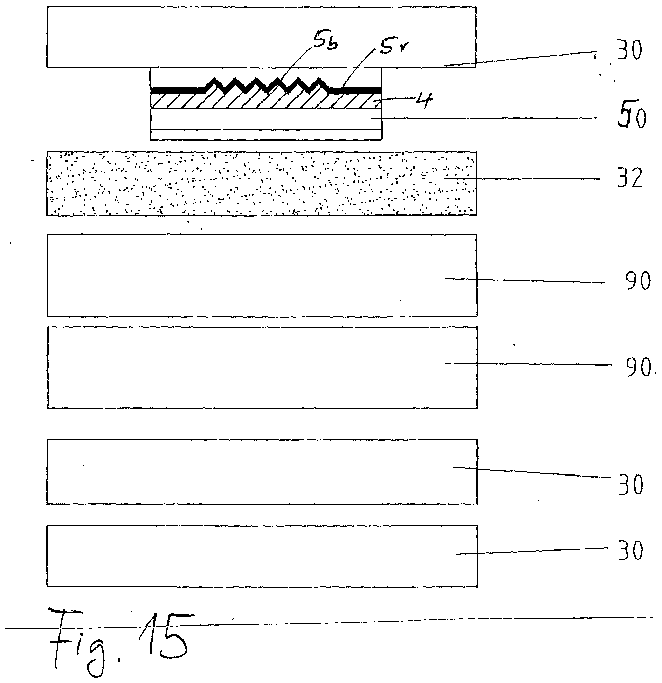

In den Figuren 13 bis 15 sind verschiedene Mehrschichtenkörper dargestellt, die durch Laminieren von diversen Overlayfolien 30 und aus Papiermaterial bestehenden Inlets 90 ausgebildet sind. Bei all diesen Ausführungsbeispielen ist mindestens eine lasersensitive Schicht 4 vorgesehen. Diese ist jeweils in einer Laminierfolie angeordnet, die von ihrem Aufbau her im wesentlichen den in den Figuren 10, 10a und 10b dargestellten Folien entspricht, bei denen es sich um Laminierfolien handelt, die durch Aufbringen einer Transferfolie auf einer Overlayfolie 30 hergestellt sind. Bei den Ausführungsbeispielen in den Figuren 14 und 15 ist zusätzlich eine weitere lasersensitive Schicht in Form einer mit Kohlenstoff und/oder Russ dotieren Overlayfolie 32 vorgesehen. Diese ist unterhalb der mit der Transferfolie versehenen Overlayfolie 30 angeordnet. Bei dem Ausführungsbeispiel in Figur 15 ist eine Hintergrundschicht 5 zwischen der lasersensitiven Schicht 4 und der dotierten Overlayfolie 32 ausgebildet. Die Hintergrundschicht 5 ist hinsichtlich ihrer Ausgestaltung und Funktion vergleichbar mit der Hintergrundschicht 5 des Ausführungsbeispiels der Figuren 12a und 12b.

## Patentansprüche

1. Mehrschichtenkörper bestehend aus einem Substrat aus Papiermaterial und einem mehrlagigen Schichtenaufbau, welcher mittels
einer als Heißprägefolie ausgebildeten Transferfolie, welche übereinander angeordnet einen Trägerfilm (1), eine Ablöseschicht (2), eine Schutzschicht (3), eine lasersensitive Schicht (4), eine Hintergrundschicht (5) und eine Kleberschicht (6) umfasst, oder
einer Laminierfolie, welche übereinander angeordnet eine Overlay-Folie (30), eine lasersensitive Schicht (40), eine Hintergrundschicht (50) und eine Kleberschicht (60) umfasst,
auf das Substrat aufgebracht ist,
wobei die Kleberschicht (6, 60) als eine Klebeverbindung zwischen dem Schichtenaufbau und dem Substrat ausgebildet ist,
wobei die Schutzschicht (3) als transparente Schutzlackschicht ausgebildet ist beziehungsweise die Overlay-Folie (30) der Schutzschicht (3) entspricht,
wobei der Schichtenaufbau mindestens eine, lasersensitives Material enthaltende Schicht (4, 40) - im folgenden lasersensitive Schicht (4, 40) genannt - aufweist, wobei das lasersensitive Material ein Gemisch aus mindestens drei Komponenten ist und jede dieser Komponenten jeweils ein Pigment oder ein anderes Farbmittel ist,
wobei das lasersensitive Material so ausgebildet ist, dass durch Lasereinwirkung in der lasersensitiven Schicht (4, 40) eine Farbmarkierung erzeugbar ist,
wobei das lasersensitive Material mindestens ein Farbmittel aufweist, das durch die Lasereinwirkung bleichbar ist, und
wobei das mindestens eine bleichbare Farbmittel ein Pigment ist.

2. Mehrschichtenkörper nach Anspruch 1,
**dadurch gekennzeichnet,**
**dass** das lasersensitive Material ein bei der Lasereinwirkung schwärzbares,
Material enthält.

3. Mehrschichtenkörper nach einem der vorangehenden Ansprüche,
**dadurch gekennzeichnet,**
**dass** das lasersensitive Material mindestens ein Farbmittel aufweist, das durch die Lasereinwirkung mit Farbumschlag seine Farbe ändert.

4. Mehrschichtenkörper nach einem der vorhergehenden Ansprüche,
**dadurch gekennzeichnet,**
**dass** das lasersensitive Material als Farbmittelgemisch ausgebildet ist, das aus mehreren verschiedenen Farbmittelkomponenten zusammensetzt ist, wobei für mindestens zwei der Komponenten gilt, dass unter den für die eine Komponente spezifischen Laserbedingungen die andere Komponente nicht oder im wesentlichen nicht verändert wird.

5. Mehrschichtenkörper nach Anspruch 4,
**dadurch gekennzeichnet,**
**dass** das Farbmittelgemisch aus mindestens drei verschiedenen Farbmittelkomponenten ausgebildet ist, wobei jede der drei Farbmittelkomponenten als Pigment ausgebildet ist und mittels Laser unter jeweils für die Komponente spezifischen Laserbedingungen bleichbar ist, wobei für jede der drei Komponenten gilt, dass unter den für eine Komponente spezifischen Laserbedingungen die übrigen Komponenten nicht oder im wesentlichen nicht bleichbar sind.

6. Mehrschichtenkörper nach Anspruch 4 oder 5,
**dadurch gekennzeichnet,**
**daß** für die verschiedenen Komponenten die spezifischen Laserbedingungen hinsichtlich der Laserwellenlänge unterschiedlich sind und unter den für die jeweilige Komponente spezifischen Laserbedingungen die übrigen Komponenten nicht oder im wesentlichen nicht bleichbar sind.

7. Mehrschichtenkörper nach einem der Ansprüche 4 bis 6,
**dadurch gekennzeichnet,**
**daß** an mindestens einer Stelle der lasersensitiven Schicht mehrere verschiedene Komponenten des Farbmittelgemisches gemischt angeordnet sind und die Farbe an dieser Stelle durch subtraktive Farbmischung gebildet ist.

8. Mehrschichtenkörper nach einem der Ansprüche 5 bis 7,
**dadurch gekennzeichnet,**
**daß** die Komponente bei der zum Bleichen eingesetzten Wellenlänge des Laserlichts absorbiert, indem die Komponente bei dieser Wellenlänge ein Absorptionsmaximum aufweist.

9. Mehrschichtenkörper nach einem der Ansprüche 5 bis 8,
**dadurch gekennzeichnet,**
**daß** die Komponente bei der zum Bleichen eingesetzten Wellenlänge des Laserlichts Licht absorbiert, wobei aber die Komponente bei dieser Wellenlänge kein Absorptionsmaximum aufweist, sondern diese Wellenlänge außerhalb des Absorptionsmaximums oder außerhalb der Absorptionsmaxima der Komponente liegt.

10. Mehrschichtenkörper nach einem der Ansprüche 4 bis 9,
**dadurch gekennzeichnet,**
**daß** das Gemisch drei oder mehr Farbmittelkomponenten aufweist.

11. Mehrschichtenkörper nach einem der Ansprüche 4 bis 10,
**dadurch gekennzeichnet,**
**daß** eine Komponente ein Cyanfarbmittel ist und/oder daß eine Komponente ein Magentafarbmittel ist und/oder daß eine Komponente ein Gelbfarbmittel ist.

12. Mehrschichtenkörper nach Anspruch 11,
**dadurch gekennzeichnet,**
**daß** das Cyanfarbmittel als ein ausschließlich oder vorzugsweise mit rotem Laserlicht bleichbares Farbmittel ausgebildet ist und/oder daß das Magentafarbmittel als ein ausschließlich oder vorzugsweise mit grünem Laserlicht bleichbares Farbmittel ausgebildet ist und/oder daß das Gelbfarbmittel ein als ausschließlich oder vorzugsweise mit blauem Laserlicht bleichbares Farbmittel ausgebildet ist.

13. Mehrschichtenkörper nach einem der vorangehenden Ansprüche,
**dadurch gekennzeichnet,**
**daß** zwischen der lasersensitiven Schicht und dem Substrat eine Hintergrundschicht ausgebildet ist, die für die bei der Laserbestrahlung des lasersensitiven Materials einwirkende Laserstrahlung in hohem Grade reflektierend und/oder insbesondere für den nicht reflektierten Anteil der Laserstrahlung nicht transparent oder weitgehend nicht transparent und/oder absorbierend ausgebildet ist.

14. Mehrschichtenkörper nach Anspruch 13,
**dadurch gekennzeichnet,**
**daß** die Hintergrundschicht für Licht im sichtbaren Spektralbereich transparent ist und/oder für die Laserstrahlung, die zur Erzeugung einer laserinduzierten Markierung in der laserinduzierten Schicht eingesetzt wird, transparent oder nicht transparent ist.

15. Mehrschichtenkörper nach einem der Ansprüche 13 und 14,
**dadurch gekennzeichnet,**
**daß** die Hintergrundschicht ausschließlich in einem Teilbereich zwischen der lasersensitiven Schicht und dem Substrat angeordnet ist.

16. Verfahren zur Herstellung einer laserinduzierten Markierung auf oder in einem Mehrschichtenkörper nach einem der vorhergehenden Ansprüche 1 bis 15, **dadurch gekennzeichnet,**
**dass** der Mehrschichtenkörper mit Laserstrahlung bestrahlt wird und dabei in der lasersensitiven Schicht durch Einwirkung der Laserstrahlung eine laserinduzierte Markierung durch Bleichen erzeugt wird.

17. Verfahren nach Anspruch 16, wobei ein Mehrschichtenkörper gemäss einem der Ansprüche 4 bis 15 mit lasersensitivem Material mit zwei oder drei bleichbaren Komponenten eingesetzt wird,
**dadurch gekennzeichnet,**
**dass** in einem ersten Schritt durch Laserbestrahlung einer Stelle der lasersensitiven Schicht bei für einen der zwei oder drei komponentenspezifischen Laserbedingungen nur die eine Komponente gebleicht wird, und dass in einem zweiten Schritt durch Laserbestrahlung derselben Stelle der lasersensitiven Schicht bei für eine weitere der zwei oder drei komponentenspezifischen Laserbedingungen nur diese weitere Komponente gebleicht wird.

18. Verfahren nach Anspruch 17,
**dadurch gekennzeichnet,**
**daß** in einem dritten Schritt durch Laserbestrahlung derselben Stelle der lasersensitiven Schicht bei für eine andere weitere der drei Komponenten spezifischen Laserbedingungen derselben Stelle der lasersensitiven Schicht nur diese andere weitere Komponente gebleicht wird.

19. Verfahren nach Anspruch 17 oder 18
**dadurch gekennzeichnet,**
**daß** in einem n-ten Schritt durch Laserbehandlung derselben Stelle der lasersensitiven Schicht bei für eine n-te weitere Komponente spezifischen Laserbedingungen nur diese n-te Komponente gebleicht wird, wobei n größer 3 ist.

20. Verfahren nach einem der Ansprüche 17 bis 19,
**dadurch gekennzeichnet,**
**daß** durch die Laserbestrahlungen dieser Stelle der lasersensitiven Schicht sämtliche Komponenten gebleicht werden.

21. Verfahren nach einem der Ansprüche 16 bis 20,
**dadurch gekennzeichnet,**
**daß** bei der Laserbestrahlung durch Steuerung der Laserintensität und/oder der Pulsdauer und/oder der Bestrahlungszeit der zu erzielende Bleichungsgrad eingestellt wird.

22. Verfahren nach einem der Ansprüche 16 bis 21,
**dadurch gekennzeichnet,**
**daß** bei der Laserbestrahlung wenigstens eine der Komponenten einen Farbumschlag aufweist.

23. Verfahren nach einem der Ansprüche 16 bis 22,
**dadurch gekennzeichnet,**
**daß** die lasersensitive Schicht an mehreren Stellen nacheinander laserbestrahlt wird.

24. Verfahren nach einem der Ansprüche 16 bis 22,
**dadurch gekennzeichnet,**
**daß** an der einen Stelle der lasersensitiven Schicht mehrere unterschiedliche Komponenten gemischt angeordnet werden und die Farbe dieser Stelle durch subtraktive Farbmischung gebildet wird.

25. Verfahren nach einem der Ansprüche 16 bis 24,
**dadurch gekennzeichnet,**
**daß** als Komponente ein Cyanfarbmittel und/ oder ein Magentafarbmittel und/oder ein Gelbfarbmittel eingesetzt wird.

26. Verfahren nach Anspruch 25,
**dadurch gekennzeichnet,**
**daß** zum Bleichen des Cyanfarbmittels rotes Laserlicht und/oder zum Bleichen des Magentafarbmittels grünes Laserlicht und/oder zum Bleichen des Gelbfarbmittels blaues Laserlicht eingesetzt wird.

27. Verfahren nach Anspruch 25 oder 26,
**dadurch gekennzeichnet,**
**daß** die **Farbe Blau** durch subtraktive Mischung der Farben Cyan und Magenta gebildet wird, durch Bleichen des Gelbfarbmittels aus dem Farbmittelgemisch mit Cyanfarbmittel, Magentafarbmittel und Gelbfarbmittel;
und/oder
**daß** die **Farbe Grün** durch subtraktive Mischung der Farben Cyan und Gelb gebildet wird, durch Bleichen des Magentafarbmittels aus dem Farbmittelgemisch mit Cyanfarbmittel, Magentafarbmittel und Gelbfarbmittel;
und/oder
**daß** die **Farbe Rot** durch subtraktive Mischung der Farben Gelb und Magenta gebildet wird, durch Bleichen des Cyanfarbmittels aus dem Farbmittelgemisch mit Magentafarbmittel, Gelbfarbmittel und Cyanfarbmittel;
und/oder
**daß Schwarz oder Grau** durch subtraktive Mischung der Farben Cyan, Magenta und Gelb aus dem Farbmittelgemisch mit Magentafarbmittel, Gelbfarbmittel und Cyanfarbmittel;
und/oder
**daß** die **Farbe Magenta** durch das Magentafarbmittel gebildet wird durch Bleichen der in dem Farbmittelgemisch vorhandenen Farbmittel außer dem Magentafarbmittel, durch Bleichen des Gelbfarbmittels und des Cyanfarbmittels aus dem Farbmittelgemisch umfassend Magentafarbmittel, Gelbfarbmittel und Cyanfarbmittel;
und/oder
**daß** die **Farbe Cyan** durch das Cyanfarbmittel gebildet wird durch Bleichen der übrigen Farbmittel in dem Farbmittelgemisch außer dem Cyanfarbmittel, durch Bleichen des Magentafarbmittels und des Gelbfarbmittels aus dem Farbmittelgemisch umfassend Cyanfarbmittel, Gelbfarbmittel und Magentafarbmittel;
und/oder
**daß** die **Farbe Gelb** durch das Gelbfarbmittel gebildet wird durch Bleichen sämtlicher Farbmittel in dem Farbmittelgemisch außer dem Gelbfarbmittel, durch Bleichen des Magentafarbmittels und des Cyanfarbmittels aus dem Farbmittelgemisch umfassend Gelbfarbmittel, Magentafarbmittel und Cyanfarbmittel.

## Claims

1. A multi-layer body comprising a substrate from paper material and a multi-layer structure, provided on the substrate with a transfer foil provided as a hot stamping film, comprising one on the other a support film (1), a peeling layer (2), a protective layer (3), a laser-sensitive layer (4), a background layer (5) and an adhesive layer (6), or a laminating foil, comprising one on the other an overlay film (30), a laser-sensitive layer (40), a background layer (50) and an adhesive layer (60), wherein the adhesive layer (6, 60) is formed as an adhesive connection between the layer structure and the substrate, wherein the protective layer (3) is formed as a transparent protective lacquer layer or wherein the overlay film (30) represents the protective layer (3), respectively, wherein the layer structure comprises at least one a laser sensitive material comprising layer (4, 40) - called laser sensitive layer (4, 40) - , wherein the laser sensitive material is a mixture made of at least three components and each of these components is a pigment or another coloring agent, wherein the laser sensitive material is configured to create a color marking through laser action on the laser sensitive layer (4, 40), wherein the laser sensitive material comprises at least one coloring agent, which can be bleached through laser action, and wherein the at least one bleachable coloring agent is a pigment.

2. The multi-layer body according to claim 1, **characterized in that** the laser-sensitive material comprises a blackenable material under the action of laser.

3. The multi-layer body according to any one of the preceding claims, **characterized in that** the laser-sensitive material has at least one coloring agent which changes its color by the action of a laser with a color change.

4. The multi-layer body according to any one of the preceding claims, **characterized in that** the laser-sensitive material is in the form of a coloring agent mixture composed of a plurality of different coloring agent components, and **in that** it applies in respect of to at least two of the components that, under the laser conditions which are specific to the one component, the other component is not or is substantially not changed.

5. The multi-layer body according to claim 4, **characterized in that** the coloring agent mixture is composed of at least three different coloring agent components, **in that** each of the three coloring agent components is in the form of a pigment and is bleachable by means of laser under laser conditions which are specific to the respective component, **in that** it applies in respect to each of the three components that, under the laser conditions which are specific to a component, the other components are not or are substantially not bleachable.

6. The multi-layer body according to claim 4 or claim 5, **characterized in that** the laser conditions which are specific to the various components are different preferably in respect to the laser wavelength and, under the laser conditions which are specific to the respective component, the other components are not or are substantially not bleachable.

7. The multi-layer body according to any one of claims 4 to 6, **characterized in that** at least at a location of the laser-sensitive layer a plurality of different components of the coloring agent mixture are arranged mixed and the color at that location is formed by subtractive color mixing.

8. The multi-layer body according to any one of claims 5 to 7, **characterized in that** the component absorbs light at the laser light wavelength used for the bleaching operation insofar as at that wavelength the component has an absorption maximum.

9. The multi-layer body according to any one of claims 5 to 8, **characterized in that** the component absorbs light at the laser light wavelength used for the bleaching operation, wherein the component at that wavelength does not have an absorption maximum but said wavelength is outside of the absorption maximum or outside of the absorption maxima of the component.

10. The multi-layer body according to any one of claims 4 to 9, **characterized in that** the mixture comprises three or more coloring agent components.

11. The multi-layer body according to any one of claims 4 to 10, **characterized in that** a component is a cyan coloring agent, and/or that a component is a magenta coloring agent, and/or that a component is a yellow coloring agent.

12. The multi-layer body according to claim 11, **characterized in that** the cyan coloring agent is in the form of a coloring agent which is bleachable exclusively or preferably with red laser light and/or the magenta coloring agent is in the form of a coloring agent which is bleachable exclusively or preferably with green laser light and/or the yellow coloring agent is in the form of a coloring agent which is bleachable exclusively or preferably with blue laser light.

13. The multi-layer body according to any one of the preceding claims, **characterized in that** between the laser-sensitive layer and the substrate a background layer is provided, which is reflecting to a high degree for the laser radiation which acts upon said laser irradiation of the laser-sensitive material and/or is in particular non-transparent or substantially non-transparent and/or absorbent for the non-reflected portion of the laser radiation.

14. The multi-layer body according to claim 13, **characterized in that** the background layer is transparent for light in the visible spectral range and/or is transparent or is not transparent for the laser irradiation, which is used to produce a laser-induced marking in the laser-induced layer.

15. The multi-layer body according to any one of claims 13 and 14, **characterized in that** the background layer is arranged exclusively in a region between the laser-sensitive layer and the substrate.

16. A process for the production of a laser-induced marking on or in a multi-layer body according to any one of the preceding claims 1 to 15, **characterized in that** the multi-layer body is irradiated with laser radiation and **in that** case a laser-induced marking is produced by bleaching in the laser-sensitive layer by the action of the laser radiation.

17. The process according to claim 16, **characterized in that** a multi-layer body is used according to any one of claims 4 to 15 with laser-sensitive material with two or three bleachable components, **characterized in that** in a first step by laser irradiation of a location of the laser-sensitive layer under laser conditions which are specific to two or three components, only the one component is bleached, and **in that** in a second step by laser irradiation of the same location of the laser-sensitive layer under laser conditions which are specific to a further of the two or three components, only that further component is bleached.

18. The process according to claim 17, **characterized in that** in a third step by laser irradiation of the same location of the laser-sensitive layer under laser conditions which are specific to another further one of the three components at the same location of the laser-sensitive layer only said other further component is bleached.

19. The process according to claim 17 or 18, **characterized in that** in an n-th step by laser treatment of the same location of the laser-sensitive layer under laser conditions which are specific to an n-th further component only said n-th component is bleached, wherein n is greater than 3.

20. The process according to any one of the claims 17 to 19, **characterized in that** all components are bleached by the laser irradiations of said location of the laser-sensitive layer.

21. The process according to any one of claims 16 to 20, **characterized in that** the degree of bleaching to be achieved is adjusted in the laser irradiation operation by control of the laser intensity and/or the pulse duration and/or the irradiation time.

22. The process according to any one of claims 16 to 21, **characterized in that** at least one of the components has a color change in the laser irradiation operation.

23. The process according to any one of claims 16 to 22, **characterized in that** the laser-sensitive layer is laser-irradiated successively at a plurality of locations.

24. The process according to any one of claims 16 to 22, **characterized in that** at the one location of the laser-sensitive layer a plurality of different components are arranged mixed and the color of said location is formed by subtractive color mixing.

25. The process according to any one of claims 16 to 24, **characterized in that** a cyan coloring agent and/or a magenta coloring agent and/or a yellow coloring agent is used as the component.

26. The process according to claim 25, **characterized in that** red laser light is used for bleaching the cyan coloring agent and/or green laser light is used for bleaching the magenta coloring agent and/or blue laser light is used for bleaching the yellow coloring agent.

27. The process according to claim 25 or 26, **characterized in that** the color blue is formed by subtractive mixing of the colors cyan and magenta, by bleaching of the yellow coloring agent from the coloring agent mixture with cyan coloring agent, magenta coloring agent and yellow coloring agent; and/or the color green is formed by subtractive mixing of the colors cyan and yellow, by bleaching of the magenta coloring agent from the coloring agent mixture with cyan coloring agent, magenta coloring agent and yellow coloring agent; and/or the color red is formed by subtractive mixing of the colors yellow and magenta, by bleaching of the cyan coloring agent from the coloring agent mixture with magenta coloring agent, yellow coloring agent and cyan coloring agent; and/or black or gray is formed by subtractive mixing of the colors cyan, magenta and yellow, from the coloring agent mixture with magenta coloring agent, yellow coloring agent and cyan coloring agent; and/or the color magenta is formed by the magenta coloring agent by bleaching of the coloring agents present in the coloring agent mixture apart from the magenta coloring agent, by bleaching of the yellow coloring agent and the cyan coloring agent from the coloring agent mixture including magenta coloring agent, yellow coloring agent and cyan coloring agent; and/or the color cyan is formed by the cyan coloring agent by bleaching of the other coloring agents present in the coloring agent mixture apart from the cyan coloring agent, by bleaching of the magenta coloring agent and the yellow coloring agent from the coloring agent mixture including cyan coloring agent, yellow coloring agent and magenta coloring agent; and/or the color yellow is formed by the yellow coloring agent by bleaching of all coloring agents present in the coloring agent mixture apart from the yellow coloring agent, by bleaching of the magenta coloring agent and the cyan coloring agent from the coloring agent mixture including yellow coloring agent, magenta coloring agent and cyan coloring agent.

## Revendications

1. Corps multicouche consistant d'un substrat de matériau en papier et d'une structure multicouche, qui est déposée avec un film de transfert prévu en tant que feuille d'estampage à chaud, contenant avec une couche sur l'autre un film de support (1), une couche de pellicule (2), une couche de protection (3), une couche d'un matériau sensible au laser (4), une couche d'arrière-plan (5) et une couche adhésive (6), ou une feuille de laminage, qui comprend avec une couche sur l'autre un film overlay (30), une couche sensible au laser (40), une couche d'arrière-plan (50) et une couche adhésive (60), sur le substrat, où la couche adhésive (6, 60) est formée en tant que connexion adhésive entre la structure des couches et le substrat, où la couche de protection (3) est formée en tant que couche de protection transparente qui représente le film overlay (30) de la couche de protection (3), où la structure des couches comprend au moins une couche (4, 40) contenant du matériau sensible aux lasers - qui est nommé couche (4, 40) sensible au laser - , où le matériau sensible aux lasers est formé pour créer par action de laser dans la couche sensible aux lasers (4, 40) un marquage de couleur, où le matériau sensible aux lasers comprend au moins un colorant qui peut être blanchi par action de laser, et où le au moins un colorant blanchissable est un pigment.

2. Corps multicouche selon la revendication 1, **caractérisé en ce que** le matériau sensible au laser comprend un matériau qui se noircit sous l'action d'un laser.

3. Corps multicouche selon l'une quelconque des revendications précédentes, **caractérisé en ce que** le matériau sensible au laser comprend au moins un colorant qui change sa couleur suite à une exposition au laser avec un changement de couleur.

4. Corps multicouche selon l'une quelconque des revendications précédentes, **caractérisé en ce que** le matériau sensible au laser est réalisé sous forme d'un mélange d'agent de coloration lequel est composé de plusieurs composants de colorants différents, où pour au moins deux des composants est entendus que dans des conditions spécifiques relatives au laser pour un composant, l'autre composant n'est pas ou n'est pratiquement pas modifié.

5. Corps multicouche selon la revendication 4, **caractérisé en ce que** le mélange de colorants est formée à partir d'au moins trois composants de colorants différents, où chacun des trois composants colorants est formé comme un pigment et peut être blanchi sous des conditions spécifiques aux laser pour ledit composant, où, pour chacun des trois composants est applicable que, parmi les conditions de laser spécifiques aux composants, les composants restants ne sont pas ou pratiquement pas blanchissables.

6. Corps multicouche selon la revendication 4 ou 5, **caractérisé en ce que** pour les différentes composants les conditions de laser spécifiques sont différents par rapport à la longueur d'onde du laser et dans les conditions de laser spécifiques pour le composant respectif, les autres composants ne sont pas ou ne sont pratiquement pas blanchissables.

7. Corps multicouche selon l'une quelconque des revendications 4 à 6, **caractérisé en ce qu'**au moins à un endroit de la couche sensible au laser plusieurs composants différents du mélange d'agent de couleur sont positionnés et **en ce que** la couleur à cet endroit est formée par un mélange de couleurs soustractif.

8. Corps multicouche selon l'une quelconque des revendications 5 à 7, **caractérisé en ce que** le composant absorbe autour de la longueur d'onde de la lumière laser utilisée pour le blanchiment, où le composant à cette longueur d'onde a un maximum d'absorption.

9. Corps multicouche selon l'une quelconque des revendications 5 à 8, **caractérisé en ce que** le composant absorbe à la longueur d'onde de la lumière laser utilisée pour le blanchiment de la lumière, où le composant à cette longueur d'onde n'a pas de maximum d'absorption, mais où cette longueur d'onde se situe en dehors du maximum d'absorption ou à l'extérieur du maximum d'absorption du composant.

10. Corps multicouche selon l'une quelconque des revendications 4 à 9, **caractérisé en ce que** le mélange comprend trois ou plus de trois composants colorants.

11. Corps multicouche selon l'une quelconque des revendications 4 à 10, **caractérisé en ce qu'**un composant est un colorant cyan, et / ou **en ce qu'**un composant est un colorant magenta, et / ou qu'un composant est un colorant jaune.

12. Corps multicouche selon la revendication 11, **caractérisé en ce que** le colorant cyan est formé exclusivement ou de préférence en tant que colorant pouvant être blanchi avec la couleur de la lumière laser rouge et / ou **en ce que** le colorant magenta est formé exclusivement ou de préférence en tant que colorant pouvant être blanchi avec une lumière laser verte et / ou **en ce que** le colorant jaune est formé exclusivement ou de préférence en tant que colorant pouvant être blanchi avec une lumière laser bleue.

13. Corps multicouche selon l'une quelconque des revendications précédentes, **caractérisé en ce qu'**une couche d'arrière-plan est formée entre la couche sensible au laser et le substrat, qui est hautement réflective pour l'irradiation par laser du matériau sensible au laser par le rayonnement laser, et / ou qui est formée en particulier pour la partie non réfléchie du rayonnement laser d'une manière non-transparente ou en grande partie non transparente et / ou absorbante.

14. Corps multicouche selon la revendication 13, **caractérisé en ce que** la couche d'arrière-plan est transparente pour de la lumière dans le domaine spectral visible et / ou transparent pour un rayonnement laser qui est utilisé pour produire un marquage dans la couche induit par laser, transparent ou non transparent.

15. Corps multicouche selon l'une quelconque des revendications 13 et 14, **caractérisé en ce que** la couche d'arrière-plan est disposée uniquement dans une région partielle entre la couche sensible au laser et le substrat.

16. Procédé de production d'une marque induite par laser sur ou dans un corps multicouche selon l'une quelconque des revendications précédentes 1 à 15, **caractérisé en ce que** le corps multicouche est irradié avec un rayonnement laser et un marquage induit par laser est produite par blanchiment dans la couche sensible au laser par l'action du rayonnement laser.

17. Procédé selon la revendication 16, dans lequel un corps multicouche selon l'une quelconque des revendications 4 à 15 est utilisé avec un matériau sensible au laser avec deux ou trois composants blanchissables, **caractérisé en ce que** dans une première étape seulement l'un des composants est blanchi par irradiation de laser d'un endroit de la couche sensible au laser dans l'une des deux ou trois conditions de laser spécifiques aux composants, et **en ce que** dans une deuxième étape seul ce composant supplémentaire est blanchi par irradiation de laser au même endroit de la couche sensible au laser dans une autre des deux ou trois conditions de laser spécifiques aux composants.

18. Procédé selon la revendication 17, **caractérisé en ce que** dans une troisième étape en particulier cet autre composant est blanchi par irradiation de laser du même point de la couche sensible au laser dans une autre des trois conditions d'émission laser.

19. Procédé selon la revendication 17 ou 18, **caractérisé en ce que** dans une n-ième étape spécifique du traitement au laser du même endroit de la couche sensible au laser avec des conditions laser pour un n-ième composant supplémentaire, que cet n-ième composant est blanchi, où n étant plus grand que 3.

20. Procédé selon l'une quelconque des revendications 17 à 19, **caractérisé en ce que** par les irradiations laser de cet endroit de la couche sensible au laser tous les composants sont blanchis.

21. Procédé selon l'une quelconque des revendications 16 à 20, **caractérisé en ce que** le degré de blanchiment à obtenir est déterminé lors de l'irradiation par laser en contrôlant l'intensité du laser et / ou la durée d'impulsion et / ou le temps d'exposition.

22. Procédé selon l'une quelconque des revendications 16 à 21, **caractérisé en ce qu'**au moins l'un des composants comporte un changement de couleur lors de l'irradiation au laser.

23. Procédé selon l'une quelconque des revendications 16 à 22, **caractérisé en ce que** la couche sensible au laser est irradiée par laser à plusieurs endroits l'un après l'autre.

24. Procédé selon l'une quelconque des revendications 16 à 22, **caractérisé en ce qu'**à cet un endroit de la couche sensible au laser sont disposés plusieurs composants différents mélangés, et la couleur à cet emplacement est formée par un mélange de couleurs soustractif.

25. Procédé selon l'une quelconque des revendications 16 à 24, **caractérisé en ce qu'**on utilise comme composant un colorant cyan et / ou un colorant magenta et / ou un colorant jaune.

26. Procédé selon la revendication 25, **caractérisé en ce que** de la lumière d'un laser rouge est utilisée pour le blanchiment du colorant cyan et / ou de la lumière d'un laser vert est utilisée pour le blanchiment du colorant magenta et / ou de la lumière d'un laser bleu est utilisé pour le blanchiment du colorant jaune.

27. Procédé selon la revendication 25 ou 26, **caractérisé en ce que** la couleur bleue est formée par superposition soustractif des couleurs cyan et magenta, par blanchiment du colorant jaune du mélange de couleurs avec le colorant cyan, le colorant magenta et le colorant jaune, et / ou **en ce que** la couleur verte est formée par superposition soustractif des couleurs cyan et jaune, par blanchiment du colorant magenta du mélange de couleurs avec le colorant cyan, le colorant magenta et le colorant jaune; et / ou **en ce que** la couleur rouge est formée par superposition soustractif des couleurs jaune et magenta, par blanchiment du colorant cyan du mélange de couleurs avec le colorant magenta, le colorant jaune et le colorant cyan, et / ou **en ce que** le noir ou le gris sont formée par superposition soustractif des couleurs cyan, magenta et jaune du mélange de couleurs avec le colorant magenta, le colorant jaune et le colorant cyan, et / ou **en ce que** la couleur magenta est formée par le colorant magenta par blanchiment des colorants du mélange de couleurs à part du colorant cyan, par blanchiment du colorant jaune et du colorant cyan du mélange de couleurs comprenant le colorant magenta, le colorant jaune et le colorant cyan, et / ou **en ce que** la couleur cyan est formée par le colorant cyan par blanchiment des autres colorants du mélange de couleurs à part du colorant cyan, par blanchiment du colorant magenta et du colorant jaune du mélange de couleurs comprenant le colorant cyan, le colorant jaune et le colorant magenta, et / ou **en ce que** la couleur jaune est formée par le colorant jaune par blanchiment de tous les colorants du mélange de couleurs à part du colorant jaune, par blanchiment du colorant magenta et du colorant cyan du mélange de couleurs comprenant le colorant jaune, le colorant magenta et le colorant cyan.
